# EUROPEAN PATENT SPECIFICATION

(11) **EP 2 978 261 B1**
(45) Date of publication and mention of the grant of the patent: **24.07.2019**
(21) Application number: 14769832.8
(22) Date of filing: 24.03.2014
(51) Int. Cl.: H04W 36/28, H04W 36/00

(54) **METHOD FOR PERFORMING HANDOVER IN WIRELESS ACCESS SYSTEM SUPPORTING DOUBLE CONNECTION MODE**
VERFAHREN ZUR ÜBERGABE IN EINEM DRAHTLOSZUGANGSSYSTEM MIT UNTERSTÜTZUNG VON DOPPELVERBINDUNGSMODUS
PROCÉDÉ POUR L'EXÉCUTION D'UN TRANSFERT INTERCELLULAIRE DANS UN SYSTÈME D'ACCÈS SANS FIL PRENANT EN CHARGE UN MODE DE CONNEXION DOUBLE

(30) Priority: 22.03.2013 US 201361804227 P
(43) Date of publication of application: 27.01.2016
(73) Proprietor: LG Electronics Inc., Seoul 07336 (KR)
(72) Inventor: CHOI, Hyeyoung, Seoul 137-893 (KR); CHUNG, Jaehoon, Seoul 137-893 (KR); LEE, Eunjong, Seoul 137-893 (KR); CHO, Heejeong, Seoul 137-893 (KR); HAHN, Genebeck, Seoul 137-893 (KR)
(74) Representative: Cabinet Plasseraud
(86) International application number: PCT/KR2014/002442
(87) International publication number: WO 2014/148874

(56) References cited:
- WO-A1-2013/020292
- WO-A1-2013/029251
- WO-A1-2014/158002
- WO-A2-2013/024335
- CN-A- 102 469 557
- US-A1- 2012 106 510
- ERICSSON ET AL: "Small cell challenges and benefits of dual connectivity", 3GPP DRAFT; R2-130416 - SMALL CELL CHALLENGES AND BENEFITS OF DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Malta; 20130128 - 20130201 18 January 2013 (2013-01-18), XP050668082, Retrieved from the Internet: URL:http://www.3gpp.org/ftp/tsg_ran/WG2_RL 2/TSGR2_81/Docs/ [retrieved on 2013-01-18]
- BROADCOM CORPORATION: "Some feasible scenarios for small cells with dual connectivity", 3GPP DRAFT; R2-130563 SOME FEASIBLE SCENARIOS FOR SMALL CELLS WITH DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. St. Julian; 20130128 - 20130201 19 January 2013 (2013-01-19), XP050668400, Retrieved from the Internet: URL:http://www.3gpp.org/ftp/tsg_ran/WG2_RL 2/TSGR2_81/Docs/ [retrieved on 2013-01-19]
- LG ELECTRONICS INC: "Text Proposal for Optimized inter-MeNB handover", 3GPP DRAFT; R3-150597 TEXT PROPOSAL FOR OPTIMIZED INTER-MENB HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG3, no. Tenerife, Spain; 20150420 - 20150424 10 April 2015 (2015-04-10), XP050954299, Retrieved from the Internet: URL:http://www.3gpp.org/ftp/tsg_ran/WG3_Iu /TSGR3_87bis/Docs/ [retrieved on 2015-04-10]
- OVERVIEW OF 3GPP RELEASE 12 V0.0.8 19 March 2013, XP055283784

## Description

### [Technical Field]

The present invention relates to a wireless access system, and more particularly, to a method for performing seamless handover in a network system supporting a dual connectivity mode, and an apparatus supporting the same.

### [Background Art]

Wireless access systems have been widely deployed to provide various types of communication services such as voice or data. In general, a wireless access system is a multiple access system that supports communication of multiple users by sharing available system resources (a bandwidth, transmission power, etc.) among them. For example, multiple access systems include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

In recent wireless access systems, the wireless access network structure has been changed in a manner that various types of small cells (e.g., a micro cell, a pico cell, a femto cell, etc.) are operatively connected with a macro cell of a relatively large size. This is intended to provide an end user equipment (UE) with a high data transfer rate to enhance quality of experience (QoE) in a situation in which multi-layer cells of a hierarchical layer basically involving a legacy macro cell coexist.

According to Small Cell Enhancements for E-UTRA and E-UTRAN SI (see, for example, RP-122033 document), which is one of 3rd Generation Partnership Project (3GPP) standardization categories, there has been a discussion on enhancement of indoor/outdoor scenarios using low power nodes. In addition, scenarios and requirements for the enhancements are disclosed in 3GPP TR 36.932.

Considering this trend, final UEs will be physically positioned closer to the network in the future as a large number of small cells is deployed in a macro cell. Accordingly, in a future wireless access network, communication through a UE-centered zone rather than the conventional physical cell-based communication is expected. To implement communication through a UE-centered zone for increase of capacity, technical issues for implementation of a service provision unit such as the UE-centered zone which is differentiated from the existing service provision unit such as a physical cell need to be found and addressed.

In addition, emergence of such small cells may significantly affect the current remote area network (RAN). In particular, the on/off characteristics of a small cell may affect deployment of macro cells regarding saving energy.

The document CN 102 469 557 discloses a method for accessing a base station and user equipment, belonging to the technical field of communication.

US 2012/106510 A1 discloses a handover procedure in a dual connectivity situation.

### [Disclosure]

### [Technical Problem]

An object of the present invention devised to solve the problem lies in a method for performing handover in a small cell environment.

Another object of the present invention is to provide a method for maintaining a small cell even when a UE performs handover to support the dual connectivity mode.

Another object of the present invention is to provide a method for seamlessly providing downlink data when a UE in the dual connectivity mode performs handover.

Another object of the present invention is to provide a method for forming a direct/indirect bearer to provide downlink data to a UE in the dual connectivity mode.

Another object of the present invention is to provide an apparatus supporting the aforementioned methods.

It will be appreciated by persons skilled in the art that the objects that could be achieved with the present invention are not limited to what has been particularly described hereinabove and the above and other objects that the present invention could achieve will be more clearly understood from the following detailed description.

### [Technical Solution]

Accordingly, the present invention is directed to a method for performing seamless handover in a network system supporting a dual connectivity mode as defined by independent claim 1.

According to an aspect provided herein is a method for supporting handover by a source cell in a wireless access system supporting a dual connectivity mode, the method including receiving a measurement report message from a user equipment (UE), transmitting a small cell maintenance request information to a target cell, and receiving a small cell maintenance response information from the target cell. The UE may maintain connection to both the source cell and a small cell in the dual connectivity mode at the same time, the small cell maintenance request information may be information for requesting maintenance of the dual connectivity mode for the small cell to support the handover, and the small cell maintenance response information may indicate whether the target cell is capable of maintaining the dual connectivity mode for the small cell.

According to a second aspect provided herein is a source cell for supporting handover in a wireless access system supporting a dual connectivity mode, the small cell including a receiver, a transmitter, and a processor for supporting the handover in the dual connectivity mode. The processor may be configured to control the receiver to receive a measurement report message from a user equipment (UE), control the transmitter to transmit a small cell maintenance request information to a target cell, and control the receiver to receive a small cell maintenance response information from the target cell. The UE may maintain connection to both the source cell and a small cell in the dual connectivity mode at the same time, the small cell maintenance request information may be information for requesting maintenance of the dual connectivity mode for the small cell to support the handover, and the small cell maintenance response information may indicate whether the target cell is capable of maintaining the dual connectivity mode for the small cell.

The method may further include transmitting, when the small cell maintenance response information indicates that the target cell continuously maintains the dual connectivity mode of the small cell, downlink data through the small cell even if the UE performs the handover.

The source cell may determine whether or not to maintain the dual connectivity mode of the small cell based on the measurement report message.

The target cell may determine whether or not to maintain the dual connectivity mode of the small cell based on the small cell maintenance request information.

The small cell maintenance request information may be transmitted through a handover request message or a small cell maintenance request message, and the small cell maintenance response information may be transmitted through a handover request acknowledgement message or a small cell maintenance acknowledgement message.

An X2 interface or an S 1 interface may be used among the source cell, the target cell and the small cell as a backhaul link. Herein, the X2 interface may be implemented on a radio bearer which is directly connected to the source cell, the target cell, and the small cell, and the S 1 interface may be implemented on a radio bearer which is indirectly connected to the source cell, the target cell, and the small cell.

The source cell and the small cell may be located at geographically spaced places.

The afore-described aspects of the present invention are merely a part of preferred embodiments of the present invention. Those skilled in the art will derive and understand various embodiments reflecting the technical features of the present invention from the following detailed description of the present invention.

### [Advantageous Effects]

According to embodiments of the present invention, the present invention has effects as follows.

First, a seamless data service may be provided to a UE in a dual connectivity mode.

Second, a small cell for supporting the dual connectivity mode may be determined.

Third, a bearer for transmitting downlink data to a UE in the dual connectivity mode may be formed.

It will be appreciated by persons skilled in the art that that the effects that can be achieved through the present invention are not limited to what has been particularly described hereinabove and other advantages of the present invention will be more clearly understood from the following detailed description.

### [Description of Drawings]

The accompanying drawings, which are included to provide a further understanding of the invention, illustrate embodiments of the invention and together with the description serve to explain the principle of the invention. In the drawings:
Fig. 1 illustrates an exemplary network structure of an E-UMTS;
Fig. 2 illustrates exemplary structures of an E-UTRAN and a gateway;
Figs. 3 and 4 illustrate a user-plane protocol and a control-plane protocol stack for the E-UMTS;
FIG. 5 illustrates the subframe structure of the LTE-A system according to cross carrier scheduling in embodiments of the present invention;
FIG. 6 illustrates an example of a connectivity mode handover procedure in the LTE system;
FIG. 7 illustrates an example of heterogeneous network deployment;
FIG. 8 illustrates an example of deployment of UEs and eNBs which are performing the dual connectivity mode;
FIG. 9 is a conceptual diagram illustrating handover performed by a UE in the dual connectivity mode;
FIG. 10 illustrates a method for a target Pcell to determine whether or not to maintain Scell connection in performing handover;
FIG. 11 illustrates another method for a target Pcell to determine whether or not to maintain Scell connection in performing handover;
FIG. 12 illustrates a method for a source Pcell to determine whether or not to maintain Scell connection in performing handover;
FIG. 13 illustrates another method for a source Pcell to determine whether or not to maintain Scell connection in performing handover;
FIG. 14 illustrates a method for configuring an X2 transport bearer;
FIG. 15 illustrates another method for configuring an X2 transport bearer;
FIG. 16 illustrates another method for configuring an X2 transport bearer;
FIG. 17 illustrates another method for configuring an X2 transport bearer;
FIG. 18 illustrates a method for configuring an indirect bearer;
FIG. 19 illustrates a method for switching the path of data transmitted from a small cell gateway (S-GW) to a source Pcell to a specific Scell(s); and.
FIG. 20 illustrates apparatuses capable of implementing the details illustrated in FIGs. 1 to 19.

### [Best Mode]

Embodiments of the present invention provide a method for managing information on on/off small cells in a small cell-based network system.

The embodiments of the present invention described below are combinations of elements and features of the present invention in specific forms. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions or elements of any one embodiment may be included in another embodiment and may be replaced with corresponding constructions or features of another embodiment.

In the description of the attached drawings, a detailed description of known procedures or steps of the present invention will be avoided lest it should obscure the subject matter of the present invention. In addition, procedures or steps that could be understood to those skilled in the art will not be described either.

In this specification, "comprising" or "including" a component means that other components may further be included, not excluded, unless otherwise specified. The terms "-unit", "-or(er)" and "module" represent at least one function or operation-processing unit that can be implemented in hardware, software, or a combination thereof. In addition, it is to be understood that the forms "a" (or "an"), "one" and "the" include plural referents unless context (particularly, the context of claims) clearly dictates otherwise in this specification.

In the embodiments of the present invention, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present invention, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on an UpLink (UL). Likewise, the UE may serve as a receiver and the BS may serve as a transmitter, on a DL.

The embodiments of the present invention can be applied to various wireless access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc. CDMA may be implemented as a radio technology such as Universal Terrestrial Radio Access (UTRA) or CDMA2000. TDMA may be implemented as a radio technology such as Global System for Mobile communications (GSM)/General packet Radio Service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, Evolved UTRA (E-UTRA), etc.

UTRA is a part of Universal Mobile Telecommunications System (UMTS). 3GPP LTE is a part of Evolved UMTS (E-UMTS) using E-UTRA, adopting OFDMA for DL and SC-FDMA for UL. LTE-Advanced (LTE-A) is an evolution of 3GPP LTE. While the embodiments of the present invention are described in the context of a 3GPP LTE/LTE-A system in order to clarify the technical features of the present invention, the present invention is also applicable to an IEEE 802.16e/m system, etc.

While embodiments of the present invention are described in the context of a 3GPP LTE/LTE-A system in order to clarify the technical features of the present invention, the technical features of the present invention are not limited to the specific system. The following detailed description includes specific terms in order to provide a thorough understanding of the present invention. However, it will be apparent to those skilled in the art that the specific terms may be replaced with other terms without departing the scope of the present invention.

In describing embodiments of the present invention, a "cell" may be configured by a combination of downlink resources and optionally uplink resources. Herein, linkage between a carrier frequency for downlink resources and a carrier frequency for uplink resources is explicitly indicated in system information (SI) delivered on the downlink resources..

In addition, the term "cell" refers to a specific frequency region or a specific geographical area as coverage of a base station. For simplicity, the term "cell" may cover the concept of a base station supporting specific coverage. For example, a macro base station has the same meaning as a macro cell, and a small base station may have the same meaning as a small cell. However, when a cell needs to be explicitly distinguished from a base station, the term "cell" has its original meaning.

Hereinafter, description will be given of a 3GPP LTE /LTE-A system as an example of the wireless access system to which embodiments of the present invention are applicable.

### 1. 3GPP LTE/LTE-A System

### 1.1 Network structures of LTE/LTE-A systems

Hereinafter, network structures which are used by the 3GPP LTE/LTE-A systems and can be applied to the embodiments of the present inventions are explained.

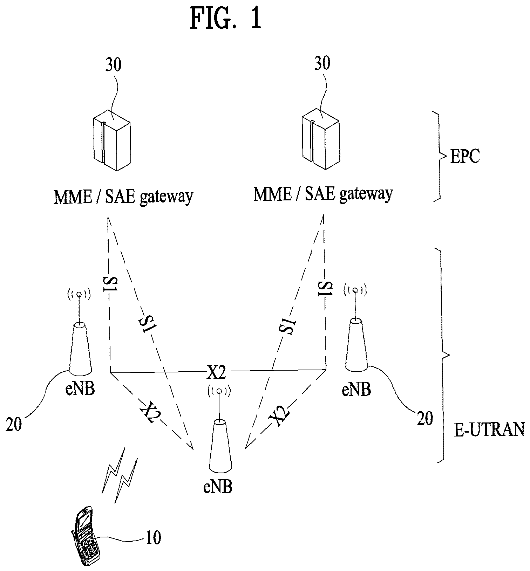

Fig. 1 illustrates a block diagram showing a network structure of an E-UMTS.

The E-UMTS is also referred to as an LTE system. A communication network is extensively positioned so as to provide diverse services, such as voice, VoIP (Voice over IP) through an IMS (IP Multimedia Subsystem), and packet data.

As shown in Fig. 1, the E-UMTS network includes an evolved UMTS Terrestrial Radio Access Network (E-UTRAN) and an evolved packet core (EPC) and one or more user equipments (UEs). The E-UTRAN may include one or more node Bs (eNBs) (20), and the plurality of user equipments (UEs) (10) may be located (or positioned) in a single cell. One or more E-UTRAN Mobility Management Entity/System Architecture Evolution (MME/SAE) gateways (30) may be located at the end of the network, so as to be connected with an external network.

The eNB (20) provides the UE (10) with end points of a User Plane and a Control Plane. The MME/SAE gateway (30) provides the UE (10) with an end point having functions of session and mobility management. The eNB (20) and the MME/SAE gateway (30) may be connected to one another through an S1 interface.

The eNB (20) generally corresponds to fixed station that communicates with the UE (10) and is also referred to as a base station (BS) or an access point. One eNB (20) may be positioned in each cell. An interface for transmitted user traffic or control traffic may be used between the eNBs (20).

The MME performs diverse functions including NAS signaling respective to the eNB 20, NAS signaling security, AS security control, inter CN node signaling for mobility between 3GPP access networks, idle mode UE reachability (including control and execution of paging re-transmission), tracking region list management (for idle mode and connected mode UEs), PDN GW and serving GW selection, MME selection for handover accompanying MME variation (or change), SGSN selection for handover to a 2G or 3G 3GPP access network, bearer management including roaming, authentication, and dedicated bearer set-up, support for transmitting PWS (including ETWS and CMAS) messages.

An SAE gateway host provides diverse functions including Per-user based packet filtering (*e.g*., using K packet checking), Lawful Interception, UE IP address allocation, transmission port level packet marting in a downlink, UL and DL service level charging (or billing), gating and rate reinforcement, DL rate reinforcement based upon APN-AMBR.

For clarity in the description of the present invention, the MME/SAE gateway (30) will be simply referred to as "gateway". However, the MME/SAE gateway (30) shall include both MME and SAE gateways.

Multiple nodes may be connected between the eNB (20) and the gateway (30) through an S1 interface. The eNBs (20) may access one another through an X2 interface, and neighboring eNBs may have a mesh network structure including the X2 interface.

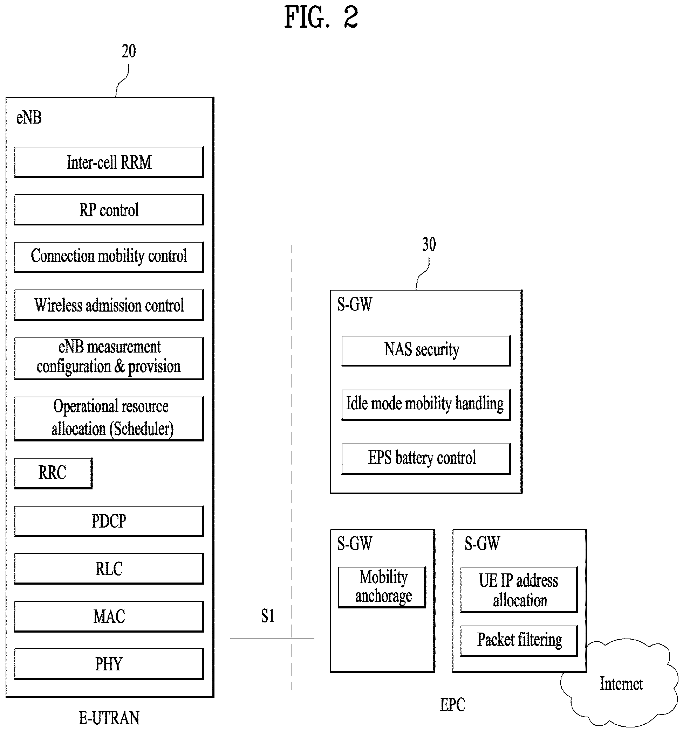

Fig. 2 illustrates a block diagram showing the structures of a general E-UTRAN and a general gateway (30).

As shown in Fig. 2, the eNB (20) may perform the functions of selecting a gateway (30), routing to a gateway during Radio Resource Control (RRC) activation, scheduling and transmitting a paging message, scheduling and transmitting broadcast channel (BCCH) information, allocating dynamic resource for UEs (10) in both uplink and downlink, configuring and preparing for eNB measurement, controlling radio bearers, performing Radio Authorization Control (RAC), and performing connection mobility control in an LTE_ACTIVE state. In the EPC, the gateway (30) may perform functions, such as paging transmission, LT_ IDLE state management, user plane encryption, System Architecture Evolution (SAE) bearer control, encryption of Non-Access Stratum (NAS) signaling, and integrity protection.

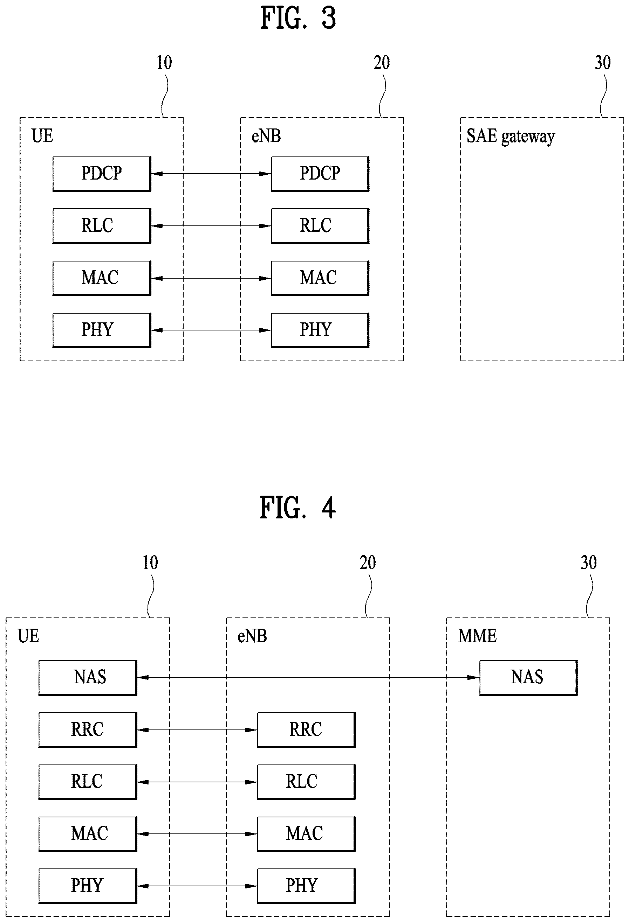

Figs. 3 and 4 illustrate block diagrams respectively showing a user-plane protocol and a control-plane protocol stack for the E-UMTS.

As shown in Figs. 3 and 4, the protocol layers may be categorized as a first layer (L1), a second layer (L2), and a third layer (L3), based upon the three (3) lower layers of an open system interconnection (OSI) standard model, which is disclosed in the technical field of communication systems.

A physical layer, *i.e*., the first layer (L1) uses a physical channel, so as to provide an information transfer service to an upper (or higher) layer. The physical layer is connected to a medium access control (MAC) layer, which is located in a layer higher than the physical layer, through a transport channel, and data are transferred between the medium access control layer and the physical layer via the transport channel. Herein, data are transferred between one physical layer of a transmitting end and the other physical layer of a receiving end via the physical channel.

A MAC layer of the second layer (L2) provides a service to a radio link control (RLC) layer above the MAC layer via a logical channel. The RLC layer of the second layer (L2) supports reliable data transfer. In case the MAC layer performs the function of an RLC layer, the RLC layer may be included as a functional block of the MAC layer. Although the RLC layer is shown in Figs. 3A and 3B, it should be noted that, in case the MAC layer performs the RLC function, the RLC layer is not required.

A PDCP layer of the second layer (L2) performs a header compression function, which decreases unnecessary control information. Herein, the header compression function is performed to efficiently transmit data, which use internet protocol (IP) packets such as IPv4 or IPv6, through a radio interface having a relatively narrow bandwidth.

A radio resource control (RRC) layer located on a lowest part of a third layer (L3) is defined in the control plane only. The RRC layer controls a logical channel, a transport channel, and a physical channel in association with configuration, re-configuration and release of radio bearers (RBs). Herein, RB refers to a service provided by the second layer (L2) for a data transfer between the UE (10) and the E-UTRAN.

As shown in Fig. 3, the RLC and MAC layer are terminated in the eNB (20) of the network and may perform functions, such as scheduling, Automatic Re-transmission request (ARQ), and Hybrid Automatic Re-transmission request (HARQ). The PDCP layer is terminated in the eNB (20) of the network and may perform user-plane functions, such as header compression, integrity protection, and encryption.

As shown in Fig. 4, the RLC and MAC layer are terminated in the eNB (20) of the network and may perform the same functions as those of the control plane. As shown in Fig. 3B, the RRC layer is terminated in the eNB (20) of the network and may perform functions, such as broadcasting, paging, RRC connection management, Radio Bearer (RB) control, mobility function, and UE (10) measurement report and control. As shown in Fig. 3B, a NAS control protocol is terminated in the MME of the gateway (30) of the network and may perform functions, such as SAE bearer management, authentication, LTE_IDLE mobility handling, LTE_IDLE paging transmission, and security control on the signaling between the gateway and the UE (10).

The RRC state may be divided into 2 different states, such as RRC_IDLE and RRC_CONNECTED.

In the RRC_IDLE state, the UE (10) may receive broadcasting of system information and paging information during a discontinuous reception (DRX), which is configured by a NAS, and the UE may be assigned (or allocated) with an ID, which can uniquely identify the UE in a tracking area, and may also perform PLMN (Public Land Mobile Network) selection and re-selection. Furthermore, in the RRC_IDLE state, no RRC context is stored in the eNB.

In the RRC CONNECTED state, the UE (10) has a E-UTRAN RRC connection and context from the E-UTRAN and is capable of transmitting and/or receiving data to/from the eNB based upon the same. Additionally, the UE (10) may report channel quality information and feedback information to the eNB.

In the RRC_CONNECTED state, the E-UTRAN recognizes the cell to which the UE (10) belongs. Accordingly, the network may transmit and/or receive data to/from the UE (10), may control the mobility of the UE (*e.g*., handover, Inter-RAT (Inter-Radio Access Technology) cell change order to a GERAN (GSM EDGE Radio Access Network) having NACC (Net-work Assisted Cell Change), and may perform cell measurement of neighboring cells.

In the RRC_IDLE mode, the UE (10) specifies a paging DRX (discontinuous reception) cycle. More specifically, the UE (10) monitors a paging signal at a specific paging occasion for each UE-specific paging DRX cycle.

### 1.2 Carrier Aggregation (CA) Environment

### 1.2.1 CA Overview

A 3GPP LTE system (conforming to Rel-8 or Rel-9) (hereinafter, referred to as an LTE system) uses Multi-Carrier Modulation (MCM) in which a single Component Carrier (CC) is divided into a plurality of bands. In contrast, a 3GPP LTE-A system (hereinafter, referred to an LTE-A system) may use CA by aggregating one or more CCs to support a broader system bandwidth than the LTE system. The term CA is interchangeably used with carrier combining, multi-CC environment, or multi-carrier environment.

In the present invention, multi-carrier means CA (or carrier combining). Herein, CA covers aggregation of contiguous carriers and aggregation of non-contiguous carriers. The number of aggregated CCs may be different for a DL and a UL. If the number of DL CCs is equal to the number of UL CCs, this is called symmetric aggregation. If the number of DL CCs is different from the number of UL CCs, this is called asymmetric aggregation. The term CA is interchangeable with carrier combining, bandwidth aggregation, spectrum aggregation, etc.

The LTE-A system aims to support a bandwidth of up to 100MHz by aggregating two or more CCs, that is, by CA. To guarantee backward compatibility with a legacy IMT system, each of one or more carriers, which has a smaller bandwidth than a target bandwidth, may be limited to a bandwidth used in the legacy system.

For example, the legacy 3GPP LTE system supports bandwidths {1.4, 3, 5, 10, 15, and 20MHz} and the 3GPP LTE-A system may support a broader bandwidth than 20MHz using these LTE bandwidths. A CA system of the present invention may support CA by defining a new bandwidth irrespective of the bandwidths used in the legacy system.

There are two types of CA, intra-band CA and inter-band CA. Intra-band CA means that a plurality of DL CCs and/or UL CCs are successive or adjacent in frequency. In other words, the carrier frequencies of the DL CCs and/or UL CCs are positioned in the same band. On the other hand, an environment where CCs are far away from each other in frequency may be called inter-band CA. In other words, the carrier frequencies of a plurality of DL CCs and/or UL CCs are positioned in different bands. In this case, a UE may use a plurality of Radio Frequency (RF) ends to conduct communication in a CA environment.

The LTE-A system adopts the concept of cell to manage radio resources. The above-described CA environment may be referred to as a multi-cell environment. A cell is defined as a pair of DL and UL CCs, although the UL resources are not mandatory. Accordingly, a cell may be configured with DL resources alone or DL and UL resources.

For example, if one serving cell is configured for a specific UE, the UE may have one DL CC and one UL CC. If two or more serving cells are configured for the UE, the UE may have as many DL CCs as the number of the serving cells and as many UL CCs as or fewer UL CCs than the number of the serving cells, or vice versa. That is, if a plurality of serving cells are configured for the UE, a CA environment using more UL CCs than DL CCs may also be supported.

CA may be regarded as aggregation of two or more cells having different carrier frequencies (center frequencies). Herein, the term 'cell' should be distinguished from 'cell' as a geographical area covered by an eNB. Hereinafter, intra-band CA is referred to as intra-band multi-cell and inter-band CA is referred to as inter-band multi-cell.

In the LTE-A system, a Primacy Cell (PCell) and a Secondary Cell (SCell) are defined. A PCell and an SCell may be used as serving cells. For a UE in RRC_CONNECTED state, if CA is not configured for the UE or the UE does not support CA, a single serving cell including only a PCell exists for the UE. On the contrary, if the UE is in RRC CONNECTED state and CA is configured for the UE, one or more serving cells may exist for the UE, including a PCell and one or more SCells.

Serving cells (PCell and SCell) may be configured by an RRC parameter. A physical-layer ID of a cell, PhysCellId is an integer value ranging from 0 to 503. A short ID of an SCell, SCellIndex is an integer value ranging from 1 to 7. A short ID of a serving cell (PCell or SCell), ServeCellIndex is an integer value ranging from 1 to 7. If ServeCellIndex is 0, this indicates a PCell and the values of ServeCellIndex for SCells are pre-assigned. That is, the smallest cell ID (or cell index) of ServeCellIndex indicates a PCell.

A PCell refers to a cell operating in a primary frequency (or a primary CC). A UE may use a PCell for initial connection establishment or connection reestablishment. The PCell may be a cell indicated during handover. In addition, the PCell is a cell responsible for control-related communication among serving cells configured in a CA environment. That is, PUCCH allocation and transmission for the UE may take place only in the PCell. In addition, the UE may use only the PCell in acquiring system information or changing a monitoring procedure. An Evolved Universal Terrestrial Radio Access Network (E-UTRAN) may change only a PCell for a handover procedure by a higher-layer RRCConnectionReconfiguraiton message including mobilityControlInfo to a UE supporting CA.

An SCell may refer to a cell operating in a secondary frequency (or a secondary CC). Although only one PCell is allocated to a specific UE, one or more SCells may be allocated to the UE. An SCell may be configured after RRC connection establishment and may be used to provide additional radio resources. There is no PUCCH in cells other than a PCell, that is, in SCells among serving cells configured in the CA environment.

When the E-UTRAN adds an SCell to a UE supporting CA, the E-UTRAN may transmit all system information related to operations of related cells in RRC_CONNECTED state to the UE by dedicated signaling. Changing system information may be controlled by releasing and adding a related SCell. Herein, a higher-layer RRCConnectionReconfiguration message may be used. The E-UTRAN may transmit a dedicated signal having a different parameter for each cell rather than it broadcasts in a related SCell.

After an initial security activation procedure starts, the E-UTRAN may configure a network including one or more SCells by adding the SCells to a PCell initially configured during a connection establishment procedure. In the CA environment, each of a PCell and an SCell may operate as a CC. Hereinbelow, a Primary CC (PCC) and a PCell may be used in the same meaning and a Secondary CC (SCC) and an SCell may be used in the same meaning in embodiments of the present invention.

### 1.2.2 Cross Carrier Scheduling

Two scheduling schemes, self-scheduling and cross carrier scheduling are defined for a CA system, from the perspective of carriers or serving cells. Cross carrier scheduling may be called cross CC scheduling or cross cell scheduling.

In self-scheduling, a PDCCH (carrying a DL grant) and a PDSCH are transmitted in the same DL CC or a PUSCH is transmitted in a UL CC linked to a DL CC in which a PDCCH (carrying a UL grant) is received.

In cross carrier scheduling, a PDCCH (carrying a DL grant) and a PDSCH are transmitted in different DL CCs or a PUSCH is transmitted in a UL CC other than a UL CC linked to a DL CC in which a PDCCH (carrying a UL grant) is received.

Cross carrier scheduling may be activated or deactivated UE-specifically and indicated to each UE semi-statically by higher-layer signaling (e.g. RRC signaling).

If cross carrier scheduling is activated, a Carrier Indicator Field (CIF) is required in a PDCCH to indicate a DL/UL CC in which a PDSCH/PUSCH indicated by the PDCCH is to be transmitted. For example, the PDCCH may allocate PDSCH resources or PUSCH resources to one of a plurality of CCs by the CIF. That is, when a PDCCH of a DL CC allocates PDSCH or PUSCH resources to one of aggregated DL/UL CCs, a CIF is set in the PDCCH. In this case, the DCI formats of LTE Release-8 may be extended according to the CIF. The CIF may be fixed to three bits and the position of the CIF may be fixed irrespective of a DCI format size. In addition, the LTE Release-8 PDCCH structure (the same coding and resource mapping based on the same CCEs) may be reused.

On the other hand, if a PDCCH transmitted in a DL CC allocates PDSCH resources of the same DL CC or allocates PUSCH resources in a single UL CC linked to the DL CC, a CIF is not set in the PDCCH. In this case, the LTE Release-8 PDCCH structure (the same coding and resource mapping based on the same CCEs) may be used.

If cross carrier scheduling is available, a UE needs to monitor a plurality of PDCCHs for DCI in the control region of a monitoring CC according to the transmission mode and/or bandwidth of each CC. Accordingly, an appropriate SS configuration and PDCCH monitoring are needed for the purpose.

In the CA system, a UE DL CC set is a set of DL CCs scheduled for a UE to receive a PDSCH, and a UE UL CC set is a set of UL CCs scheduled for a UE to transmit a PUSCH. A PDCCH monitoring set is a set of one or more DL CCs in which a PDCCH is monitored. The PDCCH monitoring set may be identical to the UE DL CC set or may be a subset of the UE DL CC set. The PDCCH monitoring set may include at least one of the DL CCs of the UE DL CC set. Or the PDCCH monitoring set may be defined irrespective of the UE DL CC set. DL CCs included in the PDCCH monitoring set may be configured to always enable self-scheduling for UL CCs linked to the DL CCs. The UE DL CC set, the UE UL CC set, and the PDCCH monitoring set may be configured UE-specifically, UE group-specifically, or cell-specifically.

If cross carrier scheduling is deactivated, this implies that the PDCCH monitoring set is always identical to the UE DL CC set. In this case, there is no need for signaling the PDCCH monitoring set. However, if cross carrier scheduling is activated, the PDCCH monitoring set is preferably defined within the UE DL CC set. That is, the eNB transmits a PDCCH only in the PDCCH monitoring set to schedule a PDSCH or PUSCH for the UE.

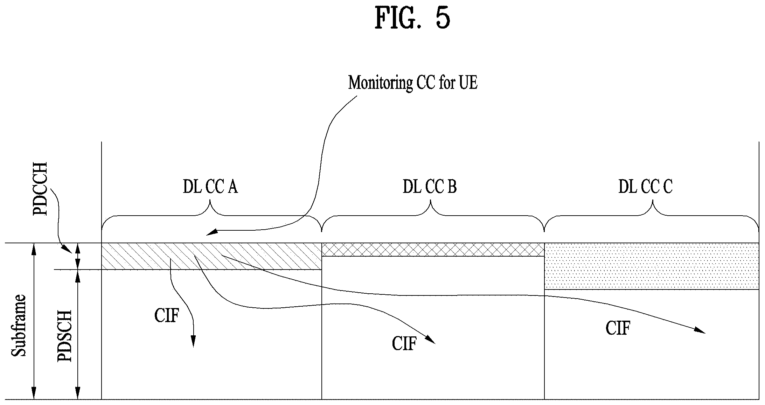

FIG. 5 illustrates a cross carrier-scheduled subframe structure in the LTE-A system, which is used in embodiments of the present invention.

Referring to FIG. 5, three DL CCs are aggregated for a DL subframe for LTE-A UEs. DL CC 'A' is configured as a PDCCH monitoring DL CC. If a CIF is not used, each DL CC may deliver a PDCCH that schedules a PDSCH in the same DL CC without a CIF. On the other hand, if the CIF is used by higher-layer signaling, only DL CC 'A' may carry a PDCCH that schedules a PDSCH in the same DL CC 'A' or another CC. Herein, no PDCCH is transmitted in DL CC 'B' and DL CC 'C' that are not configured as PDCCH monitoring DL CCs.

### 1.3 Handover Procedure

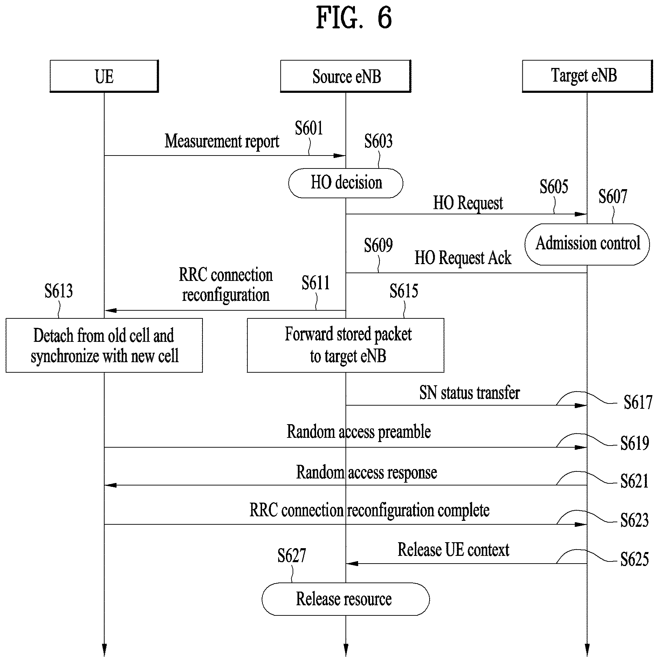

FIG. 6 illustrates an example of a connectivity mode handover procedure in an LTE system.

In FIG. 6, the network system may include a UE, a source eNB and a target eNB. Herein, the source eNB is a serving eNB to provide a scheduling service for the UE, and the target eNB may be an eNB to which the UE desires to perform handover. In addition, the source eNB and target eNB may be a legacy eNB and a macro eNB.

The network controls the UE in an RRC CONNECTED state, and a handover procedure is defined to manage mobility in the RRC CONNECTED state. Generally, the network triggers the handover procedure according to the radio channel condition and load. The handover procedure is shown in FIG. 6.

Referring to FIG. 6, the UE transmits a measurement report message containing a measurement result on a neighboring cell to the source eNB (S601).

The source eNB may determine whether or not to perform handover (HO) and a target eNB to which the UE will perform handover. Thereafter, the source eNB may transmit an HO request message to the target eNB to perform handover (S603, S605).

The target eNB controls admission of the UE. If the UE is admitted, the target eNB transmits an HO request Ack message to the serving eNB (S607, S609).

Upon receiving the HO request Acknowledgement message, the source eNB transmits an RRC connection reconfiguration message to the UE to instruct the UE to perform the HO process (S611).

Upon receiving the RRC connection reconfiguration message, the UE may be detached from the existing cell (i.e., the source eNB) and perform a process of acquiring synchronization with a new cell (i.e., the target eNB) (S613).

Since the source eNB is aware of the target eNB to which the UE will preform handover, the source eNB delivers, to the target eNB, a stored packet to be transmitted to the UE (S615).

The source eNB transmits a sequence Number (SN) status transfer message to the target eNB to deliver buffered data or packets to the target eNB (S617).

Thereafter, the UE transmits a random access preamble to match synchronization with the target eNB (S619).

In response to the random access preamble, the target eNB transmits uplink resource allocation information and timing advance (TA) information to the UE through a medium access control (MAC) message or an RRC message (S621).

The UE transmits an RRC connection reconfiguration complete message to the target eNB based on the uplink resource allocation information and TA information (S623).

If the target eNB receives the RRC connection reconfiguration complete message from the UE, the target eNB transmits a UE context release message for requesting deletion of information related to the UE (S625).

The serving eNB receiving the UE context release message releases resources for the UE and complete the handover procedure (S627).

As described above, FIG. 6 shows a legacy handover procedure performed by the UE. That is, whenever the eNB to provide the UE with the scheduling service is changed, the handover procedure illustrated in FIG. 6 is performed.

### 2. Small Cell Environment

In the embodiments of the present invention, a small cell may be described as a combination of a DL resource (i.e., a component carrier) and a selective UL resource. The relationship between carrier frequencies of the DL resource and the UL resource may be indicated by the system information transmitted on a DL resource.

### 2.1 Heterogeneous Network Deployment

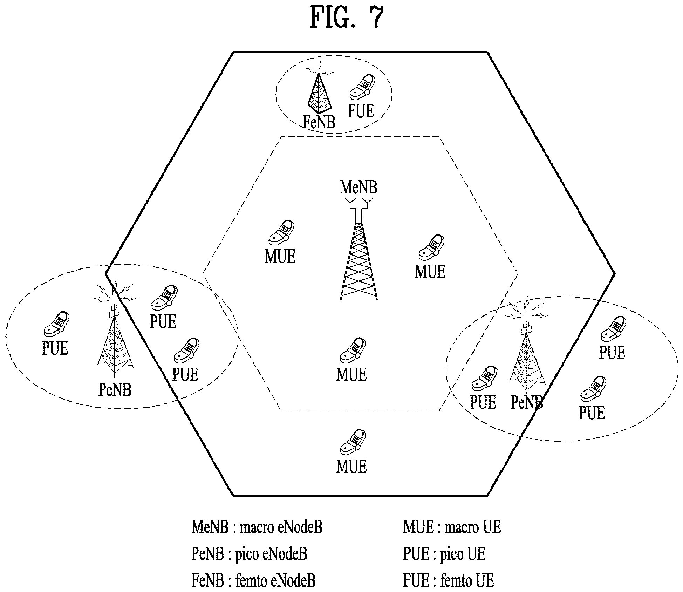

FIG. 7 illustrates an example of heterogeneous network deployment.

In the next generation mobile communication system, attention has been increasingly drawn to introduction of a hierarchical cell structure or heterogeneous cell structure in which a micro cell, a pico cell, and/or a femto cell, which are small cells for low power/short-range communication in a cell-based homogenous network, coexist in order to stably ensure data services including multimedia.

This is because additional deployment of a macro cell with the conventional eNB deployment is inefficient in terms of costs and complexity compared to system performance. A heterogeneous network, which is considered in the current communication networks, has a structure as shown in FIG. 7.

In FIG. 7, an eNB to manage and cover a macro cell is defined as a macro eNodeB (MeNB), and a UE operating in the macro cell of the MeNB is defined as a macro UE (MUE). In addition, an eNB to manage and cover a pico cell is referred as a pico eNodeB (PeNB), and a UE that is scheduled in the pico cell of the pico eNB is referred to as a pico UE (PUE). In addition, an eNB to manage and cover a femto cell is referred to as a femto eNodeB (FeNB), and a UE that is scheduled by the femto eNB is referred to as a femto UE.

Referring to FIG. 7, multiple micro cells may coexist in one macro cell. The micro cells are assigned resources according to the cell coordination scheme to provide a service for a corresponding UE. The micro cells are divided into two types according to the access scheme.
(1) Open Access Subscriber Group (OSG) type: the OSG type micro cell is a cell that allows access of an existing macro UE or micro UEs and is capable of performing handover to a cell thereof or a macro cell. The OSG type may be referred to as a Non Closed access Subscriber Group (NCSG).
(2) Closed access Subscriber Group (CSG) type: the CSG type micro cell is a cell that does not allow access of an existing macro UE or micro UEs without authentication. Accordingly, the CSG type cell cannot perform handover to the cell thereof or a macro eNB.

### 2.2 Dual Connectivity

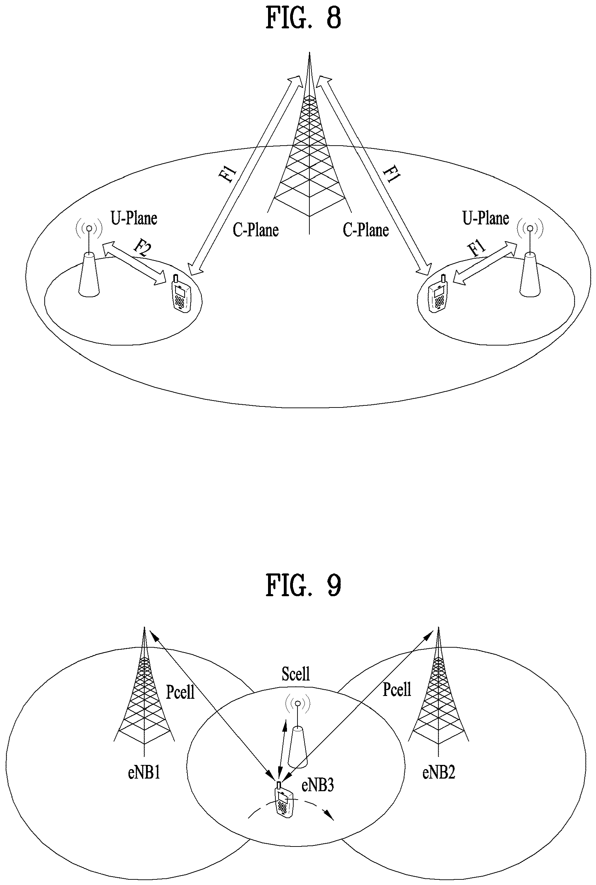

FIG. 8 illustrates an example of deployment of UEs and eNBs which are performing the dual connectivity mode.

A macro cell and a small cell may perform carrier aggregation (CA). For example, a macro eNB may use n carriers (n being a positive integer), and a small cell may use k carriers (k being a positive integer). Herein, the macro cell and the small cell may use the same frequency carrier or different carriers. For example, the macro cell may use frequency bands f1 and f2, and the small cell may use frequency bands f2 and f3.

Dual connection or dual connectivity means that a UE positioned within the small cell coverage is connectable to the macro cell and the small cell at the same time. That is, the UE may be provided with services from the macro cell and the small cell at the same time or according to a TDM scheme. For example, the UE may be provided with services of functionalities (e.g., connection management, mobility management) which are provided in the control plane (C-plane) via a macro cell layer.

In addition, the UE may select a user-plane (U-plane) data path to the macro cell and/or the small cell. For example, for a real-time data service such as VoLTE (Voice over LTE), the UE may transmit and receive data to and from the macro cell, which ensures mobility of the UE, rather than the small cell. Small cells may be densely deployed, and accordingly when the UE moves among the small cells, the UE needs to frequently perform handover, which may result in interruption of services. If a UE in the dual connectivity state is provided with a best effort service (BES), the UE may be provided with the service from a small cell rather than from the macro cell. The backhaul between the macro cell and the small cell may be ideal backhaul or non-ideal backhaul.

In addition, the macro cell and the small cell may be configured by the same TDD or FDD system or by different TDD and FDD systems. For example, FIG. 8 shows a scenario in the dual connectivity mode. That is, the macro cell and the small cell may use the same frequency bands (F1, F1) or use different frequency bands (F1, F2).

A UE for which the dual connectivity mode is configured may be connected to a macro cell and a small cell at the same time. In the example of FIG. 8, a U-plane data path to the small cell is configured. That is, the UE may have a C-plane path for transmission and reception of a control signal which is directed to a macro eNB and a U-plane path for transmission and reception of downlink or uplink data which is directed to a small eNB.

### 3. Handover by Dual Connectivity Mode UE

A dual connectivity mode UE connected to source Pcell and Scell may perform handover, thereby switching to the dual connectivity mode in which the UE is connected to the target Pcell and Scells. Herein, one or more Scells to which the UE is connected before performing handover and one or more Scells to which the UE is connected after performing handover may include a cell having the same frequency band (DL/UL or DL) and/or physical cell ID (PCID).

FIG. 9 is a conceptual diagram illustrating handover performed by a UE in the dual connectivity mode.

The network illustrated in FIG. 9 may include eNB1 and eNB2, which are Pcells, and eNB3, which is an Scell. In this figure, it is assumed that the Pcells and the Scell are managed by different eNBs. In this situation, the UE desires to move from eNB1, which is a source Pcell, to eNB2, which is a target Pcell. At this time, the UE is the dual connectivity mode with eNB1 and eNB3 which is an Scell. eNB1 is abel to determine whether to perform handover to eNB2 according to an event of a measurement report message transmitted from the UE.

Generally, when the UE performs handover, the UE releases all connections to old eNBs and established connection to a new target eNB. In the embodiments of the present invention, the UE in the dual connectivity mode releases connection to the source Pcell and establishes connection to the target Pcell, but may maintain connection to the existing small cell in order to be provided with a seamless data service. For example, when the UE of FIG. 9 performs handover to eNB2, the UE may establish connection eNB2, while maintaining connection to eNB3 which is an Scell.

In FIG. 9. the UE may configure the dual connectivity mode together with eNB1 and one or more Scells while being connected to eNB1, or may configure the dual connectivity mode together with one or more Scells after performing handover to eNB2. Of course, if the UE does not need to be provided with the data service, the UE may release the dual connectivity mode and maintain connection to only eNB1 or eNB2 which is a Pcell.

In the LTE Rel-8/9/10 systems, handover is performed based on the Pcell in the CA situation. In the step of preparing handover from the source eNB to the target eNB, a direct tunnel or indirect tunnel may be configured to perform DL data forwarding between the source eNB and the target eNB. Thereby, when the UE is detached from the source eNB, a DL data packet which needs to be transmitted to the UE from the source eNB (including a Pcell or the Pcell and one or more Scells) is delivered to the buffer of the target eNB (including a Pcell or the Pcell and one or more Scells). After the UE completes establishment of connection to the target eNB, the UE may receive the buffered data from the target eNB.

In addition, in a normal handover situation, the UE may receive DL data directed thereto by the source eNB from the target eNB after completing the handover procedure. To this end, in the handover preparation process, the source eNB transmits, to the target eNB, the DL data directed to the UE.

In embodiments of the present invention, however, if the UE in the dual connectivity mode performs handover from the source eNB (Pcell) to the target eNB (Pcell), a DL data packet may be seamlessly transmitted to the UE during handover using Scells to which the UE is connected.

eNB3 employed in the embodiments of the present invention, is not limited to the small cell, and may be a macro cell, micro cell, pico cell, or femto cell. For simplicity, the Pcell of the source eNB and the Pcell of the target eNB are defined as a source Pcell and a target Pcell, respectively in the embodiments of the present invention. In addition, the source eNB and the target eNB may be connected to one or more Scells.

### 3.1 Configuration of Dual Connectivity

Hereinafter, methods for configuring dual connectivity will be described.

In the legacy LTE-Rel8/9/10 systems, when carrier aggregation (CA) is performed, any one carrier in an eNB may be configured as a Pcell, and the other cells in the eNB may be configured as Scells. The eNB may transmit Scell information on one or more Scells through an RRC (re)configuration message, which is UE-specifically transmitted over an RRC signal transmitted through the Pcell. An Scell may be configured in a UE receiving the RRC (re)configuration message.

The Scell configured as above is in the deactivated state. Thereafter, the eNB may activate one or more Scells configured in the UE by transmitting an MAC signal via the Pcell. The UE may perform measurement reporting on the channel state for the activated Scells.

In the case of CA used in the legacy LTE/LTE-A systems, the eNB is capable of recognizing the load status of the cell thereof. Accordingly, the eNB may transmit an RRC (re)configuration message to the UE through the Pcell to allow one or more Scells to be added or released in consideration of the UE.

However, in the dual connectivity mode, the Pcell and the Scells to which the UE is connected are generally managed by different eNBs. That is, as the eNB of the Pcell differs from the eNB of the Scells, the Scell configuration method as used in the legacy LTE/LTE-A systems cannot be applied as it is.

The dual connectivity mode for the UE may be determined based on the load information on the Scells or whether or not the UE supports the dual connectivity mode. Hereinafter, methods for configuring the dual connectivity mode will be described.

### 3.1.1 Determination by Pcell

According to an aspect of the present invention, the Pcell may determine whether or not the dual connectivity mode is supported.
(1) The Pcell may determine one or more Scell candidates according to a measurement report from a UE supporting the dual connectivity mode.
(2) Thereafter, the Pcell may transmit a load information request message to the one or more Scell candidates. Herein, the load information request message may be transmitted as a backhaul signal (e.g., an X2 interface signal or a radio signal).
(3) An Scell receiving the load information request message transmits, to the Pcell, a load information message containing load status information thereof in response. The load information message may also be transmitted through an X2 interface or a backhaul signal, which is a wireless interface.
(4) Upon receiving the load information from the Scell candidates, the Pcell determines Scells for a UE which is to enter the dual connectivity mode. Thereafter, the Pcell may transmit the information on the determined Scells to the UE using an RRC (re)configuration message, thereby supporting the dual connectivity mode.

### 3.1.2 Determination by Scell

An Scell may determine whether or not to support the dual connectivity mode.
(1) The Pcell may determine one or more Scell candidates according to a measurement report message from a UE supporting the dual connectivity mode. After determining the one or more Scell candidates, the Pcell may transmit a dual connectivity request message to the Scell candidates to check if the candidates are capable of operating in the dual connectivity mode. Herein, the dual connectivity request message may be transmitted as a backhaul signal (e.g., an X2 interface signal or a wireless interface signal).
(2) Upon receiving the dual connectivity request message, the one or more Scells may determine whether or not to support the dual connectivity mode for the UE in consideration of the load status of the cell thereof. Once the one or more Scells determine to support the dual connectivity mode for the UE, the one or more Scells may transmit a dual connectivity response message to the Pcell through a backhaul signal to inform the Pcell of whether or not the dual connectivity mode will be supported.
(3) Upon receiving the dual connectivity response message, the Pcell may configure the corresponding Scells in the dual connectivity mode in the UE using an RRC (re)configuration message.

### 3.2 Conditions for Maintenance of Dual Connectivity Mode

In embodiments of the present invention which will be described below, it will be assumed that whether or not the dual connectivity mode is supported is determined according to the description given in section 3.1 above. In the dual connectivity mode in which a specific UE is connected to a source Pcell and Scells simultaneously, the UE may perform handover to a target Pcell. In this case, at least one of one or more Scells having established connection to the UE in the dual connectivity mode may maintain the connection. In this case, the Scells may maintain the dual connectivity mode under the following conditions.
(1) Before performing handover, the UE in the dual connectivity mode may transmit, to the source Pcell, a measurement report message containing information on signal strength of one or more Scells. Then, the source Pcell may trigger continuous maintenance of connection for specific Scells in the process of handover performed by the UE based on the signal strength for the one or more Scells.
   For example, if the signal strength of Scell which the UE in the dual connectivity mode has measured and reported is greater than or equal to a preset threshold, the source Pcell may trigger continuous maintenance of connection of the Scells during handover. The threshold may be predetermined in the system, or may be dynamically set by the eNB according to the load condition of the network. For example, when the eNB configures the dual connectivity mode, the eNB may notify the threshold to the UE.
(2) Whether or not the dual connectivity mode is maintained may be determined according to the movement speed (or speed) of the UE. For example, if the speed of the UE in the dual connectivity mode is lower than or equal to a specific value or specific level, the source Pcell may trigger maintenance such that the UE maintains the Scell in the handover procedure. The specific value or specific level for the movement speed of the UE may be predefined in the system, or be dynamically set by the eNB.

### 3.3 Maintenance of Scell Connection During Handover

### 3.3.1 Determination of maintenance Scell connection by target Pcell

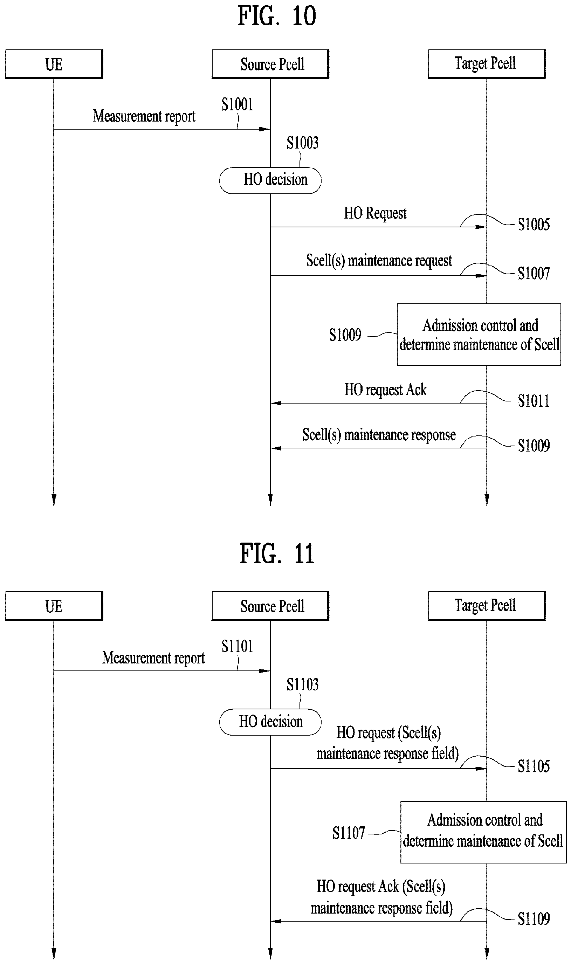

FIG. 10 illustrates a method for a target Pcell to determine whether or not to maintain Scell connection in performing handover.

Before performing handover, the UE measures channel qualities of nearby cells including an Scell, and transmit a measurement report message containing information related to the measured channel qualities to a source Pcell (S1001).

The source Pcell may determine, based on the measurement report message, that a dual connectivity mode UE will perform handover to a target Pcell (S1003).

Once the source Pcell determines handover in step S1003, the source Pcell transmits an HO request message to the target Pcell (S1005).

In addition, the source Pcell may transmit an Scell(s) maintenance request message to the target Pcell to check if Scell connection of the UE which is currently in the dual connectivity mode is to be maintained (S1007).

The Scell(s) maintenance request message may contain Scell information. The Scell information may include a type field indicating the type of the message (i.e., an indicator indicating the Scell(s) maintenance request message), an Scell ID (ECGI (E-UTRAN Cell Global Identifier) or ECI (E-UTRAN Cell Identifier)) for each of one or more specific Scells which are to be maintained, a UE ID (UE-CRNTI, UE X2AP ID, or the like), an Scell index, a PCID and frequency configuration information (DL/UL or DL).

Upon receiving the Scell(s) maintenance request message, the target Pcell determines whether or not to continuously maintain connection for one or more specific Scells indicated by the Scell(s) maintenance request message on behalf of the UE which desires to perform HO and is known through the HO request message (S1009).

If the target Pcell decides to admit handover of the UE and maintain the Scell, the target Pcell transmits, to the source eNB, an HO request response message and an Scell(s) maintenance response message containing Scell information on the Scells which the target Pcell intends to maintain (S1011, S1013).

As another aspect of the present invention, the source Pcell and the target Pcells may have information on small cells for which the source Pcell and the target Pcells can support the dual connectivity mode as a cell list in advance. Herein, the small cells to which the dual connectivity mode is to be applied may be limited to the Scells which are connectable to Pcells through an X2 interface. The cell list may include information such as an ID (e.g., ECGI (E-UTRAN Cell Global Identifier) or ECI (E-UTRAN Cell Identifier)) of each cell, a UE ID (e.g., UE-CRNTI or UE X2AP ID), a PCID, and frequency configuration information (DL/UL or DL). This information may be exchanged between cells when the cells establish an X2 interface therebetween.

Accordingly, in step S1009, the target Pcell may check if one or more small cells for which the Scell maintenance request is received from the source Pcell are included in the cell list that the target Pcell manages, thereby determining whether or not to perform Scell maintenance. If the list in the target Pcell includes one or more maintainable Scells, the target Pcell may transmit an Scell(s) maintenance response message to the source Pcell in step S1013.

Herein, the Scell(s) maintenance response message may include Scell maintenance information. The Scell maintenance information may include a type field (an indicator indicating the Scell(s) maintenance response message), an Scell ID (e.g., ECGI (E-UTRAN Cell Global Identifier) or ECI (E-UTRAN Cell Identifier)) for each of one or more specific Scells whch the target Pcell desires to maintain, a PCID), a UE ID (UE-CRNTI or UE X2AP ID), an Scell index, and frequency configuration information (DL/UL or DL).

If a small cell capable of supporting the dual connectivity mode is not included in a cell list of the target Pcell in step S1009, the target Pcell may transmit an Scell maintenance failure message in place of the Scell(s) maintenance response message to the source Pcell in step S1013.

Herein, the Scell maintenance failure message may include a type field (an indicator indicating the Scell maintenance failure message), each Scell ID (e.g., ECGI (E-UTRAN Cell Global Identifier) or ECI (E-UTRAN Cell Identifier), a PCID) for each of one or more specific Scells, a UE ID (UE-CRNTI or UE X2AP ID, an Scell index, frequency configuration information (DL/UL or DL) and a Cause field indicating a cause of failure. The Cause field indicates a cause by which the corresponding Scells cannot be maintained among several predefined causes.

The source Pcell may or may not resend the maintenance request for the corresponding Scells to the target Pcell based on the Cause field after a specific time (e.g., a predefined time value or a time set by the network) passes.

According to another aspect of the present invention, a part of the one or more Scells for which the target Pcell has received a maintenance request from the source Pcell may be maintainable, but the other Scells may not be maintainable. In this case, the target Pcell may use the Scell maintenance indicator to signal whether or not each of the Scells for which the target Pcell has received the maintenance request is maintainable. For example, if the target Pcell intends to maintain a certain Scell, the target Pcell may indicate that the Scell is maintained by setting the Scell maintenance indicator for the Scell to '1'. If the Scell is not maintained, the target Pcell may set the Scell maintenance indicator to '0'. Herein, the Scell maintenance indicator may be transmitted through an Scell(s) maintenance Ack message.

If the target Pcell receives an HO request message in step S1005, the target Pcell may transmit the HO request Ack message to the source Pcell in step S1011 after performing resource allocation and admission control.

The HO request response message may contain information on an RRC signal configured for the UE by the target Pcell. In this case, the target Pcell may use Scell-related information configured for the UE to include Scell information on each of the specific Scell(s) which the target Pcell intends to maintain in the message. The Scell maintenance information may include an ID (e.g., ECGI (E-UTRAN Cell Global Identifier) or ECI (E-UTRAN Cell Identifier), a PCID), an UE ID (UE-CRNTI or UE X2AP ID), an Scell index, and Scell frequency configuration information (DL/UL or DL) for each Scell. The HO request Ack message may further include an Scell index, an Scell PCID, and Scell frequency configuration information (DL/UL or DL) for each of Scells which the target Pcell newly configures.

In this case, the Scell index of a specific Scell which the target Pcell intends to maintain may have the same configuration as the information on the specific Scells included in the HO request message transmitted from the source Pcell. Since the UE is connected to the source Pcell in the step of preparing handover, the UE may receive an RRC signal related to the target Pcell and the Scells that will be maintained from the source Pcell through an RRC E-UTRA Handover Command message (not shown).

FIG. 11 illustrates another method for a target Pcell to determine whether or not to maintain Scell connection in performing handover.

Before performing handover, the UE measures channel qualities of nearby cells including an Scell, and transmit a measurement report message containing information related to the measured channel qualities to a source Pcell (S1101).

The source Pcell may determine, based on the measurement report message, that a dual connectivity mode UE will perform handover to a target Pcell (S1103).

In addition, if the condition for triggering maintenance of a specific Scell is satisfied, (see section 3.2), the source Pcell may make a request to the target Pcell for maintenance of the Scell using an HO request message including the Scell maintenance request field (S1105).

The HO request message includes an RRC context-related field including information on the Scell which the dual connectivity mode UE intends to maintain. That is, the Scell information includes an Scell ID (e.g., ECGI (E-UTRAN Cell Global Identifier) or ECI (E-UTRAN Cell Identifier), a PCID), a UE ID (UE-CRNTI or UE X2AP ID), an Scell index, and frequency configuration information (DL/UL or DL) for each of the Scells configured for the UE. In addition, the fields indicting respective Scell-related information contained in the HO request message may include an Scell maintenance request field.

For example, if the source Pcell make a request to maintain an Scell for the UE, the HO request message transmitted to the target Pcell may contain an Scell maintenance indicator for the Scell which is set to '1'. For Scells which the source Pcell has determined not to maintain, the source Pcell may transmit an HO request message containing the Scell maintenance indicator set to '0'.

Upon receiving the HO request message, the target Pcell may perform resource allocation and admission control for the UE. In addition, the target Pcell may determine whether or not to maintain the Scell (S1107).

When the resource allocation and admission control for the UE is completed in step S1107, the target Pcell may transmit an HO request Ack message including an Scell maintenance response field to the source Pcell. Herein, the HO request Ack message may include information indicating whether or not to maintain a specific Scell for the UE (S1109).

The HO request Ack message may contain information on an RRC signal configured by the target Pcell. Herein, the Scell-related information configured for the UE may include an Scell ID (e.g., ECGI (E-UTRAN Cell Global Identifier) or ECI (E-UTRAN Cell Identifier), a PCID), a UE ID (UE-CRNTI or UE X2AP ID), an Scell index, Scell frequency configuration information (DL/UL or DL) for each of specific Scells that the target Pcell intends to maintain. The HO request Ack message may further include an Scell index, an Scell PCID, and Scell frequency configuration information (DL/UL or DL) for each of Scells which the target Pcell newly configures for the UE.

In this case, the Scell index of a specific Scell which the target Pcell intends to maintain may have the same configuration as the information on the specific Scells included in the HO request message transmitted from the source Pcell. Since the UE is connected to the source Pcell in the step of preparing handover, the UE may receive an RRC signal related to the target Pcell from the source Pcell through an RRC E-UTRA Handover Command message (not shown).

In order for the source Pcell to transmit Scell configuration-related information to the UE using the RRC E-UTRA Handover Command message, an Scell maintenance indicator field for each of the Scells may be additionally defined in a Target eNB To Source eNB Transparent Container field, which is contained in the HO request Ack message transmitted from the target Pcell to the source Pcell. The Scell maintenance indicator field indicates whether or not the target Pcell has determined to maintain a specific Scell for the UE.

For example, if the information field for a second component carrier (CC2), which is an Scell, is set to '1' in the HO request message transmitted from the source Pcell to the target Pcell, the target Pcell determines whether or not to maintain CC2 for the UE performing HO. Thereafter, if the target Pcell decides to maintain CC2, the target Pcell transmits, to the source Pcell, the HO request Ack message containing information fields for CC2 including the Scell maintenance response field set to '1'.

Alternatively, if CC2 is not maintainable for a UE or the target Pcell intends not to maintain CC2 for the UE, the Scell maintenance response field may be set to '0' among the information fields contained in the HO request Ack message.

In the embodiments of the present invention, CC2 represents one of small cells configuring the dual connectivity mode together with the UE. Of course, other CCs may be configured in place of CC2 as the small cell.

### 3.3.2 Source Pcell determines whether or not to maintain Scell connection

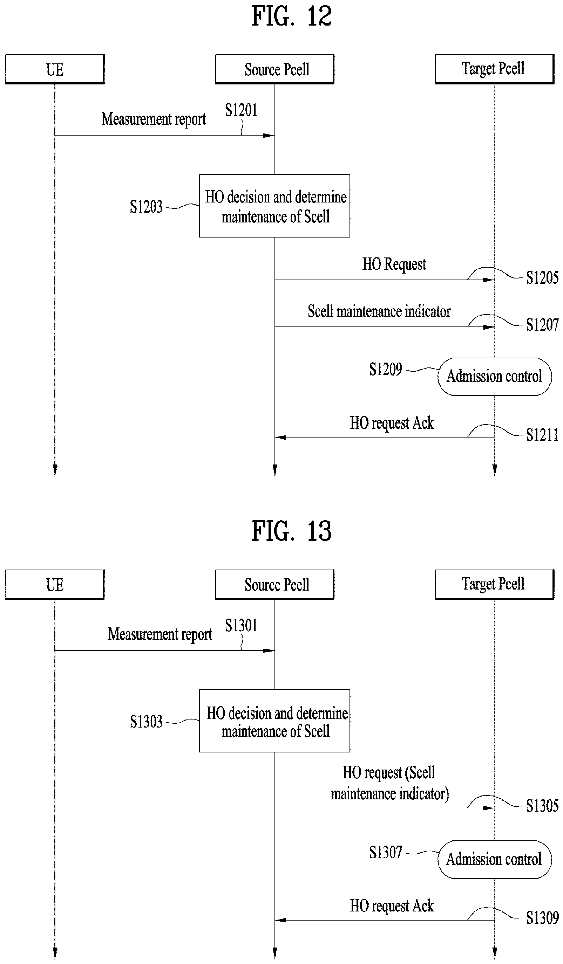

FIG. 12 illustrates a method for a source Pcell to determine whether or not to maintain Scell connection in performing handover.

Before performing handover, the UE measures channel qualities of nearby cells including an Scell, and transmit a measurement report message containing information related to the measured channel qualities to a source Pcell (S1201).

The source Pcell may determine, based on the measurement report message, whether or not the dual connectivity mode UE will perform handover to a target Pcell and whether or not to continuously maintain Scells configured in the dual connectivity mode. For methods to determine whether or not to maintain the Scells, refer to section 3.2 (S1203).

If the source Pcell determines handover in step S1203, the source Pcell transmits an HO request message to the target Pcell (S1205).

If the triggering condition for Scell maintenance is satisfied for specific Scells, the source Pcell may transmit an Scell(s) maintenance indicator message to the target Pcell to signal the specific Scells which the source Pcell has decided to maintain (S1207).

The Scell(s) maintenance indicator message may contain Scell information on each of the specific Scells which the source Pcell has decided to maintain. The Scell information may include an Scell ID (e.g., ECGI (E-UTRAN Cell Global Identifier) or ECI (E-UTRAN Cell Identifier), a PCID), a UE ID (UE-CRNTI or UE X2AP ID), an Scell index, and Scell frequency configuration information (DL/UL or DL) for each of the Scells.

After receiving an HO request message from the source Pcell, the target Pcell may perform resource allocation and admission control for a UE which is a target of HO (S1209).

Thereafter, the target Pcell may transmits RRC configuration information in the target Pcell to the source Pcell through an HO request Ack message. The source Pcell may transmit the received RRC configuration information of the target Pcell to the UE through a handover command message (not shown).

If the target Pcell normally receives the Scell(s) maintenance indicator message in step S1207, the target Pcell transmits an HO request Ack message in response to the Scell(s) maintenance indicator message (S1211).

Herein, Scell information on specific Scells may be contained in the Target eNB To Source eNB Transparent Container field transmitted through the HO request Ack message. The Scell information may include an Scell ID (e.g., ECGI (E-UTRAN Cell Global Identifier) or ECI (E-UTRAN Cell Identifier), a PCID), a UE ID (UE-CRNTI or UE X2AP ID), an Scell index, and Scell frequency configuration information (DL/UL or DL) for each of the specific Scells which the target Pcell may maintain. The HO request Ack message include an Scell ID (e.g., ECGI (E-UTRAN Cell Global Identifier) or ECI (E-UTRAN Cell Identifier), PCID), a UE ID (UE-CRNTI or UE X2AP ID), an Scell index, and Scell frequency configuration information (DL/UL or DL) for each of Scells which the target Pcell newly configures for the UE. Herein, the Scell indexes of specific Scells which are to be maintained may be identical to the specific cell indexes contained in the Scell(s) maintenance indicator message transmitted from the source Pcell. If the HO request Ack message contains configuration of the specific Scells which are to be maintained for the UE in step S1211, the source Pcell receiving the message may confirm that the target Pcell has normally received the Scell(s) maintenance indicator message.

FIG. 13 illustrates another method for a source Pcell to determine whether or not to maintain Scell connection in performing handover.

Before performing handover, the UE measures channel qualities of nearby cells including an Scell, and transmit a measurement report message containing information related to the measured channel qualities to a source Pcell (S1301).

The source Pcell may determine, based on the measurement report message, whether or not the dual connectivity mode UE will perform handover to a target Pcell and whether or not to continuously maintain Scells configured in the dual connectivity mode. For methods to determine whether or not to maintain the Scells, refer to section 3.2 (S1303).

If the source Pcell determines handover in step S1303, the source Pcell transmits an HO request message to the target Pcell (S1305).

Herein, the HO request message may include a RRC context field containing Scell information on the specific Scells which have been determined to be maintained. Herein, the Scell information may include an Scell maintenance indicator field indicating whether or not each Scell is maintained.

For example, if the dual connectivity mode UE includes three Scells, the source Pcell may configure Scell information for each of the three Scells. In this case, the Scell maintenance indicator included in the Scell information may indicate whether or not each of the Scells is maintained. For example, if the Scell maintenance indicator is set to '1', ths means that the corresponding Scell is maintained. If the Scell maintenance indicator is set to '0', this means that the corresponding Scell is not maintained.

Subsequent steps and relevant descriptions are the same as those given above with reference to FIG. 12.

### 3.4 Methods for forwarding downlink data

In the procedures for determining whether or not to maintain a specific Scell(s) described in section 3.2, data/signals may be transmitted and received between the source Pcell and the target Pcell through an X2 interface, which is a backhaul network. If the X2 interface is not present between the source Pcell and the target Pcell, messages related to determining whether or not to maintain specific Scells may be transmitted and received through an MME.

Transmitting and receiving messages related to determining whether or not to maintain the specific Scell(s) through an S1 interface via the X2 interface or MME affects the handover procedure for a specific UE that is determined by the source Pcell and the target Pcell. That is, when the specific UE performs handover, the same interface or different interfaces may be used in relation to X2 handover and S1 handover.

When the specific Scell(s) is maintained for the UE, the data forwarding indicator field transmitted through the HO request message which is used in the LTE/LTE-A system and TEID(Terminal End Point ID) transmitted through the handover request Ack message may be omitted. This is because the aforementioned information is needed to generate a direct tunnel or indirect tunnel together with the target Pcell in the LTE/LTE-A system to forward the DL data of the source Pcell, but the methods proposed in the embodiments of the present invention are used to forward the DL data of the source Pcell to the specific Scell(s) that is maintained by a UE.

Hereinafter, a detailed description will be given of methods for forwarding downlink (DL) data received from the existing source Pcell through the maintained Scell(s) when a dual connectivity mode UE performs handover to a target Pcell.

An X2 bearer (i.e., direct bearer) or S1 bearer (i.e., indirect bearer) may be generated between a source Pcell and specific Scell(s). In this case, a data bearer may be generated between the source Pcell and the specific Scell(s) irrespective of the type of handover between the source Pcell and the target Pcell (e.g., X2 handover or S1 handover). That is, the X2 bearer (direct bearer) or S1 bearer (indirect bearer) may be generated according to interface configuration between the source Pcell and the Scell(s). For simplicity, X2 handover is assumed between the source Pcell and the target Pcell in embodiments of the present invention. However, the present invention is not limited thereto.

If the source Pcell determines HO of a specific UE to the target Pcell and the UE satisfies the conditions for triggering maintenance of a specific Scell(s), methods for transmission of DL data of the source Pcell through the Scell(s) may be determined depending on whether or not X2 connection to the specific Scell(s) is available. For example, if the source Pcell and the specific Scell(s) can establish X2 connection, an X2 transport bearer may be configured between the source Pcell and the specific Scell(s), and the DL data of the source Pcell may be forwarded to the specific Scell(s) through the X2 transport bearer. If X2 connection cannot be established between the source Pcell and the specific Scell(s), an S1 bearer may be generated as a source Pcell-small cell gateway (S-GW)-specific Scell(s) path (namely, an indirect tunnel through the S1 bearer is generated) using the MME, and the DL data of the source Pcell may be forwarded to the specific Scell(s) through the S1 bearer.

### 3.4.1 When X2 bearer is generated between source Pcell and specific Scell(s)

If the source Pcell and the specific Scell(s) can establish X2 connection, the source Pcell may allocate the ID of a data radio bearer (DRB) configured between the source Pcell and the specific Scell(s) to deliver a data packet for DL data forwarding, an transmit a data forwarding request message to the specific Scell(s) to generate an X2 bearer.

The data forwarding request message may include a message type field (i.e., an indicator indicating the data forwarding request message), a PCID or ECGI (E-UTRAN Cell Global Identifier) of the source Pcell, a PCID or ECGI of the specific Scell(s), context information (e.g., UE ID (C-RNTI or UE X2AP ID), QCI (Quality of Service Class Identifier) of E-RAB (E-UTRAN Radio Access Bearer), ARP (Allocation and Retention Priority), UE-AMBR (UE Aggregate Maximum Bit-Rate), etc.) for the UE, and a DRB ID configured for the specific Scell(s) to deliver a packet for the UE in the radio interval.

The specific Scell(s) receiving the data forwarding request message may configure an X2 transport bearer (i.e., a GTP (GPRS Tunneling Protocol) tunnel) together with the source Pcell to receive DL data forwarded from the source Pcell. To this end, the specific Scell(s) allocates an X2 Scell TEID, which is a downlink TEID of the X2 GTP tunnel. Thereafter, the specific Scell(s) transmits a data forwarding Ack message to the source Pcell such that an X2 transport bearer for delivering DL data to the specific Scell in the handover execution step is configured based on the value of the X2 Scell TEID.

The data forwarding Ack message may include a message type field (i.e., an indicator indicating the data forwarding Ack message), a PCID or ECGI of the source Pcell, a PCID or ECGI and X2 Scell TEID of the specific Scell(s), and a UE ID (C-RNTI or UE X2AP ID). Accordingly, upon receiving the data forwarding Ack message, the source Pcell may configure an X2 GTP tunnel, which is an X2 transport bearer for forwarding data.

If the specific Scell(s) cannot satisfy QoS for the UE or data of the source Pcell cannot be forwarded for the UE due to excessive load, the Scell may transmit, to the source Pcell, a data forwarding failure message in place of the data forwarding Ack message.

The data forwarding failure message may include a message type field (an indicator indicating the data forwarding failure message), a PCID or ECGI of the source Pcell, a PCID or ECGI of the specific Scell(s), a Cause field indicating a cause of failure, and a UE ID (C-RNTI or UE X2AP ID).

The embodiments described below may be implemented using the data forwarding request message, data forwarding Ack message and/or data forwarding failure message described above.

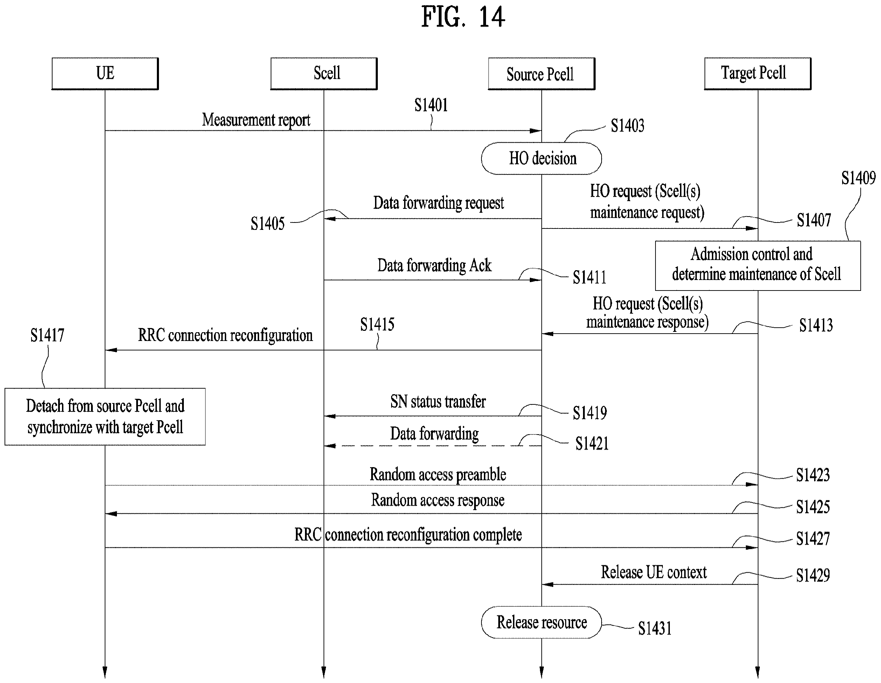

FIG. 14 illustrates a method for configuring an X2 transport bearer.

Steps S1401, S1403, S1407, S1409 and S1413 of FIG. 14 correspond to steps S1101 to S1109 of FIG. 11. That is, the source Pcell may transmit an HO request message containing an Scell maintenance request field to the target Pcell to make a request for maintenance of Scells in the dual connectivity mode, and the target Pcell may transmit an HO request Ack message containing an Scell maintenance response field to the source Pcell to deliver information on Scells which can be maintained by the target Pcell. For details, refer to the descriptions given above with reference to FIG. 11. Hereinafter, a description will be given of a method for configuring an X2 transport bearer.

An X2 transport bearer for data forwarding may be configured between the source Pcell and the specific Scell(s) irrespective of the HO preparation procedure between the source Pcell and the target Pcell. In addition, if HO failure occurs as the target Pcell receiving the HO request message cannot guarantee, for example, QoS of the UE, or if a specific Scell(s) cannot be maintained as the target Pcell fails to control the specific Scell(s), the source Pcell may configure a bearer for forwarding data to the specific Scell(s).

The HO request message and HO request Ack message of FIG. 14 may include an Scell maintenance request field and an Scell maintenance response field, which are intended to maintain the specific Scell(s). In this case, an X2 transport bearer for data transmission may be configured between the source Pcell and the Scell irrespective of the HO request message and the HO request Ack message.

Referring to FIG. 14, the source Pcell transmits a data forwarding request message to one or more Scells in order to configure the X2 transport bearer (S1405).

Upon receiving the data forwarding request message, the one or more Scells transmits a data forwarding Ack message to the source Pcell if the one or more Scells can generate the X2 transport bearer (S1411).

For configuration of the data forwarding request message and/or data forwarding Ack message, the descriptions given above may be referenced.

Thereafter, even if the dual connectivity mode UE performs handover to the target Pcell, the source Pcell transmits Scells information on the maintained Scell to the UE through RRC connection reconfiguration message (S1415).

Steps S1417 to S1431 are the same as steps S613 to S627 of FIG. 6 described above. Accordingly, description of steps S1417 to S1431 will not be given below. The source Pcell may transmit DL data to the Scell through the X2 transport bearer formed through steps S1405 and S1407 (S1421).

The DL data may be delivered to the UE which is performing handover, and thus UE may immediately receive the DL data during handover (not shown). That is, seamless handover is possible.

In addition, in FIG. 14, since the X2 transport bearer is configured regardless of the HO preparation procedure, steps S1405 and S1411 may be performed irrespective of the order in which steps S1407 to S1413 are performed.

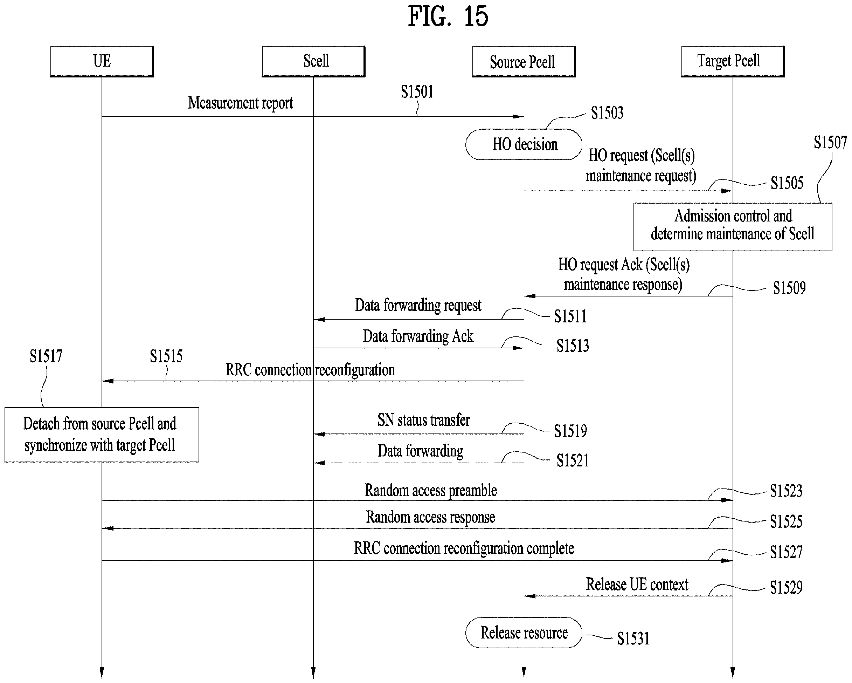

FIG. 15 illustrates another method for configuring an X2 transport bearer.

Steps S1501 to S1531 of FIG. 15 are similar to steps S1401 to S1431 of FIG. 14. FIG. 15 illustrates a method for configuring an X2 transport bearer between the source Pcell and a specific Scell(s) when the HO preparation procedure between the source Pcell and the target Pcell is completed.
(1) If HO failure occurs as, for example, the target Pcell receiving the HO request message cannot guarantee QoS for the UE, or (2) if specific Scells cannot be maintained as, for example, the target Pcell fails to control the specific Scells, HO may not be performed between the source Pcell and the target Pcell.

That is, if HO is not performed, DL data does not need to be delivered to the Scells since the source Pcell can continuously provide the UE with DL data that is to be forwarded to the UE. Accordingly, the X2 transport bearer does not need to be configured between the source Pcell and the Scell.

Accordingly, in FIG. 15, the X2 transport bearer may be configured in order to forward DL data of the source Pcell to the Scell only when the HO preparation procedure is completed. That is, step S1511 of transmitting a data forwarding request message for configuring the X2 transport bearer and step S1513 of transmitting a data forwarding Ack message in response are performed after an HO request Ack message is transmitted to the source Pcell, which is the HO preparation procedure.

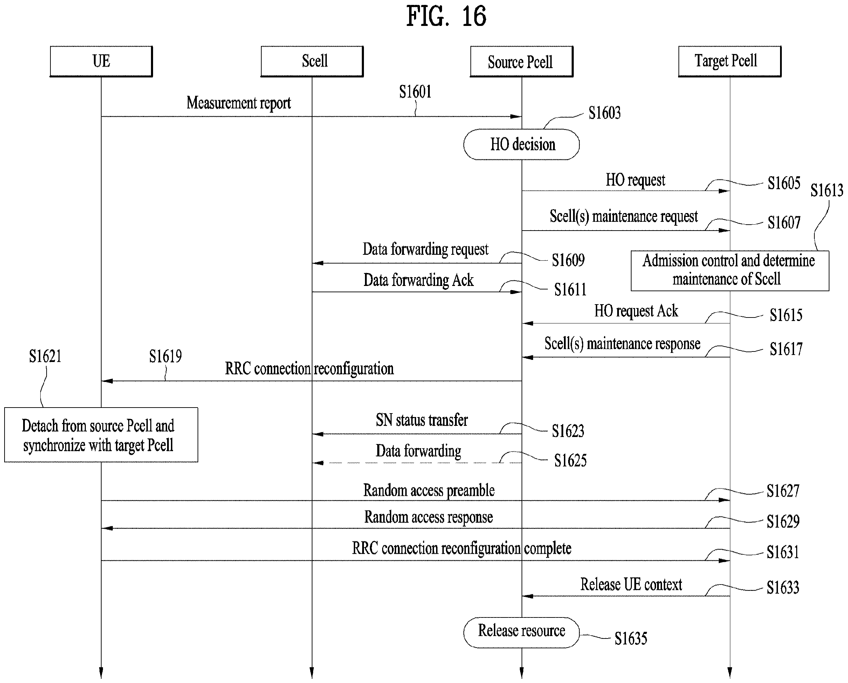

FIG. 16 illustrates another method for configuring an X2 transport bearer.

Steps S1601, S1603, S1605, S1607, S1613, S1615 and S1617 of FIG. 16 correspond to steps S1001 to S1013 of FIG. 10. That is, the source Pcell may transmit an Scell(s) maintenance request message to the target Pcell to check if a dual connectivity mode Scell will be maintained, and the target Pcell may transmit an Scell(s) maintenance Ack message to the source Pcell to deliver information on an Scell which the target Pcell can maintain. For details, refer to the description given above with reference to FIG. 10. Hereinafter, a method for configuring an X2 transport bearer will be described.

An X2 transport bearer for data forwarding may be configured between the source Pcell and the specific Scell(s) irrespective of the HO preparation procedure between the source Pcell and the target Pcell. In addition, if HO failure occurs as the target Pcell receiving the HO request message cannot guarantee, for example, QoS of the UE, or if a specific Scell(s) cannot be maintained as the target Pcell fails to control the specific Scell(s), the source Pcell may configure a bearer for forwarding data to the specific Scell(s).

The Scell(s) maintenance request message and Scell(s) maintenance Ack message of FIG. 16 may include Scell information (first Scell information) for requesting maintenance of each of the specific Scell(s) and Scell information (second Scell information) on Scells which are determined to be maintained. In this case, an X2 transport bearer for data transmission may be configured between the source Pcell and the Scell irrespective of the Scell(s) maintenance request message and Scell(s) maintenance Ack message.

Referring to FIG. 16, the source Pcell transmits a data forwarding request message to one or more Scells in order to configure the X2 transport bearer (S1609).

Upon receiving the data forwarding request message, the one or more Scells transmits a data forwarding Ack message to the source Pcell if the one or more Scells can generate the X2 transport bearer (S1611).

For configuration of the data forwarding request message and/or data forwarding Ack message, the descriptions given above may be referenced.

Thereafter, even if the dual connectivity mode UE performs handover to the target Pcell, the source Pcell transmits Scells information on the maintained Scell to the UE through RRC connection reconfiguration message (S1619).

Steps S1621 to S1635 are the same as steps S613 to S627 of FIG. 6 described above. Accordingly, description of steps S1621 to S1635 will not be given below. The source Pcell may transmit DL data to the Scell through the X2 transport bearer formed through steps S1609 and S1611 (S1625).

The DL data may be delivered to the UE which is performing handover, and thus UE may immediately receive the DL data during handover (not shown). That is, seamless handover is possible.

In addition, in FIG. 16, since the X2 transport bearer is configured regardless of the HO preparation procedure, steps S1609 and S1611 may be performed irrespective of the order in which steps S1605 to S1617 are performed.

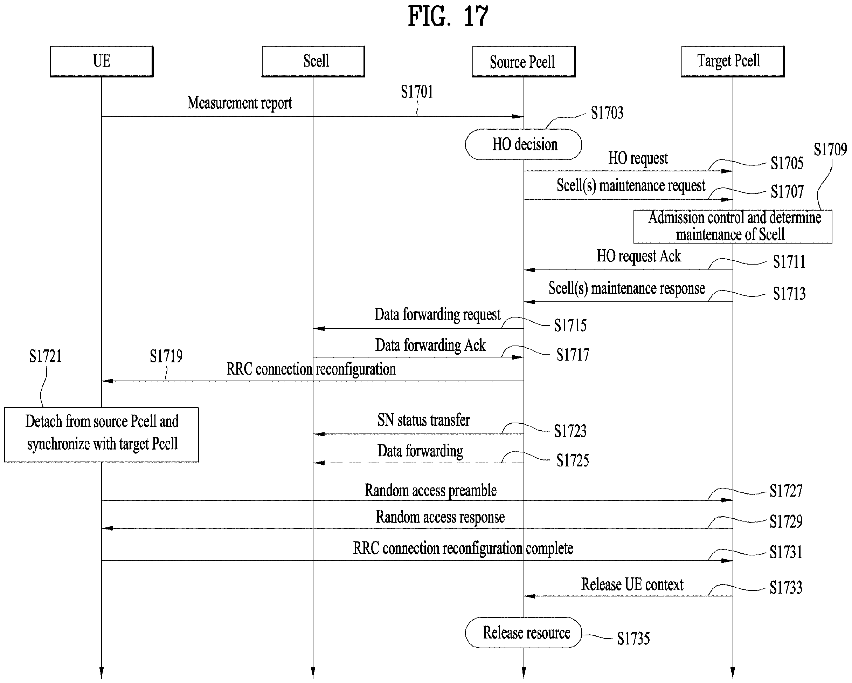

FIG. 17 illustrates another method for configuring an X2 transport bearer.

Steps S1701 to S1735 of FIG. 17 are similar to steps S1601 to S1635 of FIG. 16. FIG. 17 illustrates a method for configuring an X2 transport bearer between the source Pcell and a specific Scell(s) when the HO preparation procedure between the source Pcell and the target Pcell is completed.
(1) If HO failure occurs as, for example, the target Pcell receiving the HO request message cannot guarantee QoS for the UE, or (2) if specific Scells cannot be maintained as, for example, the target Pcell fails to control the specific Scells, HO may not be performed between the source Pcell and the target Pcell.

That is, if HO is not performed, DL data does not need to be delivered to the Scells since the source Pcell can continuously provide the UE with DL data that is to be forwarded to the UE. Accordingly, the X2 transport bearer does not need to be configured between the source Pcell and the Scell.

Accordingly, in FIG. 17, the X2 transport bearer may be configured in order to forward DL data of the source Pcell to the Scell only when the HO preparation procedure is completed. That is, step S1715 of transmitting a data forwarding request message for configuring the X2 transport bearer and step S1717 of transmitting a data forwarding Ack message in response are performed after an HO request Ack message is transmitted to the source Pcell, which is the HO preparation procedure.

After the X2 transport bearer for forwarding data to one or more Scells is generated according to the method illustrated in FIGs. 14 to 17, the source Pcell may transmit an RRC reconfiguration message to the UE (S1415, S1515, S1619, S1719). The RRC reconfiguration message contains a DRB ID for one or more Scells which the source Pcell has decided to maintain. A DRB between the one or more maintained Scells and the UE using the DRB ID. The RRC reconfiguration message may also contain Scell information on the one or more Scells which the source Pcell has decided to maintain, and the Scell information may be transmitted while the information for a specific Scell configured by the source Pcell is maintained.

Upon receiving the RRC reconfiguration message, the UE performs a procedure of detaching itself from the source Pcell. In this case, the UE maintains connection with the specific Scell(s) which has been determined to be maintained. In addition, the one or more Scells may recognize the count value of the first uplink packet to be received from the UE and the count value of the first downlink packet to be transmitted to the UE using information such as a DL count (e.g., DL PDCP SN) and a UL count (e.g., UL PDCP SN) which are included in a sequence number status transfer message transmitted from the source eNB to the one or more Scells.

Herein, UL count information may be omitted from the sequence number status transfer message. After the source Pcell transmit the sequence number status transfer message to the one or more Scells, the source Pcell transmits a DL packet received from the S-GW to the one or more Scells which have been determined to be maintained, using the X2 transport bearer configured as the X2 interface. Upon receiving the DL data packet, the one or more Scells may forward the DL data packet to the UE having established connection therewith. Thereby, the DL data service may be seamlessly provided when the UE performs HO.

The source Pcell may transmit UL count information to the target Pcell through the sequence number status transfer message. The target Pcell receiving this information may obtain the count value of the first UL packet to be received from the UE (not shown).

### 3.4.2 When X2 bearer is not generated between source Pcell and specific Scell(s)

(1) If there is no X2 connection between the source Pcell and the specific Scell(s), (2) if there is X2 connection, but DL data of the source Pcell is not allowed to be forwarded through the X2 connection, or (3) if the operation of configuring an X2 bearer between the source Pcell and specific Scell(s) fails, the source Pcell and the specific Scells may generate an indirect bearer using S1 interface. If an indirect bearer is generated using the the S1 interface, the source Pcell may communicate with the specific Scells using a mobility management entity (MME), and perform data forwarding using the indirect bearer. Hereinafter, description will be given of methods for generating an indirect bearer.

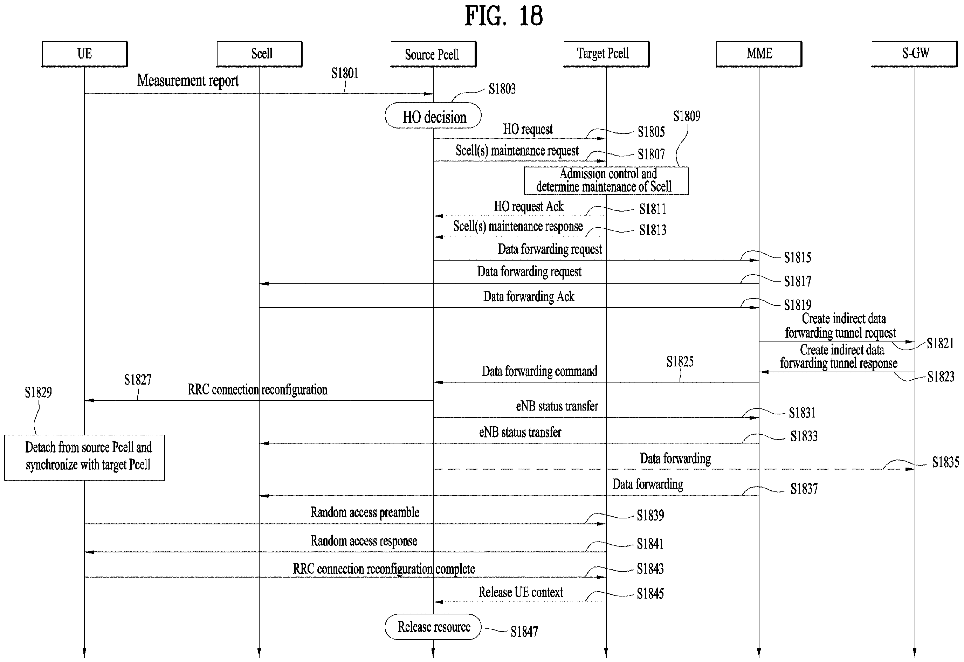

FIG. 18 illustrates a method for configuring an indirect bearer.

Steps S1801 to S1813 are the same as steps S1001 to S1013 of FIG. 10. Accordingly for details of steps S1801 to S1813, refer to the description given above with reference to FIG. 10. Hereinafter, a description will be given of a method for configuring an indirect bearer for forwarding DL data to a dual connectivity mode UE.

If the source Pcell and specific Scell(s) cannot establish X2 connection(namely, configuration of an X2 transport bearer), the source Pcell transmits first data forwarding request message to the MME. The first data forwarding request message may include a message type field (i.e., an indicator indicating the data forwarding request message), a PCID or ECGI of the source Pcell, a PCID or ECGI of the specific Scell(s), a DRB ID configured for the specific Scell(s) to deliver a DL packet for the UE in the radio interval, and a UE ID (e.g., C-RNTI or UE S1AP ID) (S1815).

Upon receiving the first data forwarding request message, the MME may transmit a second data forwarding request message to the specific Scell(s) to request data forwarding in place of the source Pcell (S1817).

The second data forwarding request message may include a message type (i.e., an indictor indicating the second data forwarding request message), context information on the UE (e.g., an ID (C-RNTI or UE S1AP ID) of the UE, an QCI (Quality of Service Class Identifier) of an E-RAB (E-UTRAN Radio Access Bearer), ARP (Allocation and Retention Priority), a UE-AMBR (UE Aggregate Maximum Bit-Rate), etc.), a DRB ID configured for the specific Scell(s) to deliver a packet for the UE in the radio interval, and an C-RNTI of the UE.

Upon receiving the second data forwarding request message, the specific Scell(s) allocates S1 Scell TEID (downlink TEID of a GTP tunnel between the S-GW and the specific Scell(s)) such that the source Pcell can configure an indirect bearer (i.e., GTP tunnel) to the specific Scell(s) via theS-GW, in order to receive the DL data forwarded to the source Pcell. In this case, whether or not to configure the indirect bearer (GTP tunnel) may be determined in consideration of QoS for a UE. In addition, the specific Scells receiving the data forwarding request message may configure a DRB with the UE using the DRB ID acquired through the second data forwarding request message.

The Scells having receiving the second data forwarding request message and decided to generate an indirect bearer transmits a data forwarding request Ack message to the MME (S1819).

The data forwarding request Ack message may contain a message type field (i.e., an indicator indicating the data forwarding request Ack message) and S1 Scell TEID (a downlink TEID of the GTP tunnel between the S-GW and the specific Scell(s)) allocated by the specific Scell(s) for E-RAB configuration for indirect forwarding.
(1) If HO fails as the specific Scell(s) cannot guarantee QoS for the UE, or (2) if the DL data of the source Pcell cannot be delivered to the UE due to excessive load, the specific Scell(s) may transmit a data forwarding failure message to the MME in step S1819. The data forwarding failure message may contain a message type field (i.e., an indicator indicating the data forwarding failure message), a PCID or ECGI of the source Pcell, a PCID or ECGI of the specific Scell(s), a Cause field indicating the cause of data forwarding failure, and a UE ID (e.g., C-RNTI or UE S1AP ID).

Meanwhile, the MME having received the data forwarding request Ack message transmits an indirect data forwarding tunnel request message to the S-GW (S1821).

The indirect data forwarding tunnel request message may include an EPS bearer ID and an S1 Scell TEID (a downlink TEID of the GTP tunnel between the S-GW and the specific Scell(s)). The S-GW receiving the indirect data forwarding tunnel request message configures an S1 bearer for indirect data forwarding between the specific Scell(s) and the S-GW. Upon completing confirmation of the S1 bearer, the S-GW generates an S1 TEID (a UL TEID of the GTP tunnel between the S-GW and the source Pcell) for indirect forwarding, and transmits an indirect data forwarding tunnel Ack message to the MME (S1823).

The indirect data forwarding tunnel Ack message contains an S1 TEID (a UL TEID of the GTP tunnel between the S-GW and the source Pcell) and an EPS bearer ID. Upon receiving the indirect data forwarding tunnel Ack message, the MME transmits a data forwarding command message to the source Pcell (S1825).

The data forwarding command message may include a message type field (i.e., an indicator indicating the data forwarding command message) and an S1 TEID (a UL TEID of the GTP tunnel between the S-GW and the source Pcell). The source Pcell receiving the data forwarding command message generates a UL S1 bearer with the S-GW.

Thereafter, the source Pcell transmits an RRC (re)configuration message to the UE (S1827). The RRC (re)configuration message contains a DRB ID which the source Pcell generated to forward data to the specific Scell(s). the specific Scell(s) and the UE may configure a DRB using the DRB ID. The RRC (re)configuration message may contain information items related to specific Scell(s) for which the dual connectivity mode is to be maintained. In this case, Scell information on the specific Scell(s) may be transmitted while the Scell information on the specific Scell(s) configured by the existing source Pcell is maintained.

The UE receiving the RRC (re)configuration message detaches itself from the source Pcell, and matches synchronization with the target Pcell. At this time, the UE may maintain connection with specific Scell(s) which has been determined to be maintained (S1829).

The source Pcell transmits an eNB status transfer message to the MME. Herein, the eNB status transfer message may contain information such as a DL count indicting the sequence number of DL data to be transmitted to the UE (i.e., DL PDCP SN) and a UL count indicating the sequence number of UL data for the UE to transmit (i.e., UL PDCP SN) (S1831).

Upon receiving the eNB status transfer message, the MME transmits an eNB status transfer message to the specific Scell(s) which has been determined to be maintained (S1833).

Accordingly, the specific Scell(s) may recognize the count value of the first downlink packet to be transmitted to the UE and the count value of the first uplink packet for the UE to transmit. However, information such as the UL count may be omitted from the eNB status transfer message.

The source Pcell may transmit a sequence number status transfer message containing UL count information to the target Pcell via the MME. The target Pcell receiving this information may recognize the count value of the first uplink packet to receive from the UE (not shown).

After the MME transmits the eNB status transfer message to the specific Scell(s), the source Pcell may transmit the DL data packet received from the S-GW to the specific Scells via the indirect bearer (i.e., S1 bearer). That is, the source Pcell transmits the DL data packet received from the S-GW back to the S-GW (S1835), and the S-GW transmits the DL data packet to the specific Scell(s) (S1837).

Upon receiving the DL data packet, the specific Scells may forward the DL data packet to the UE connected therewith (not shown).

FIG. 18 illustrates a method for configuring an indirect bearer for data transmission between the source Pcell and the S-GW and between the S-GW and the specific Scells to forward the DL data of the source Pcell when the UE performs X2 handover from the source Pcell to the target Pcell.

If an X2 bearer by which the source Pcell and the specific Scell(s) are directly connected cannot be generated, an indirect bearer may be generated. In this case, the procedure of generating the indirect bearer may be similar to the procedure of generating the X2 bearer.
(1) A data forwarding indirect bearer may be configured between the source Pcell and the specific Scell(s) irrespective of the HO preparation procedure between the source Pcell and the target Pcell.
(2) A data forwarding indirect bearer may be configured between the source Pcell and the specific Scell(s) only when the HO preparation procedure between the source Pcell and the target Pcell is completed.
(3) A data forwarding indirect bearer may be configured between the source Pcell and the specific Scell(s) irrespective of Scell(s) maintenance between the source Pcell and the target Pcell.
(4) A data forwarding indirect bearer may be configured between the source Pcell and the specific Scell(s) when determination and configuration of the specific Scell(s) maintenance is completed between the source Pcell and the target Pcell.

The RRC reconfiguration message which the source Pcell transmits for the UE may contain information for indicating the specific Scell(s) maintenance. That is, an Scell maintenance indicator may be contained in the RRC reconfiguration message. The UE receiving the Scell maintenance indicator may continuously maintain connection with the Scell during HO if the Scell information on the specific Scell(s) determined to be maintained contains the Scell maintenance indicator.

In the embodiments of the present invention described above, method for generating a direct/indirect bearer between the source Pcell and specific Scells to forward DL data of the source Pcell have been proposed. Such bearer generation methods may be applied in the same manner as a method for configuring a bearer generated for the purpose of data transmission between the source Pcell and the target Pcell during handover.

Alternatively, the bearer generated for the purpose of data transmission between the source Pcell and the target Pcell according to an existing method may not be configured, and only a bearer for data forwarding between the source Pcell and the specific Scell may be generated.

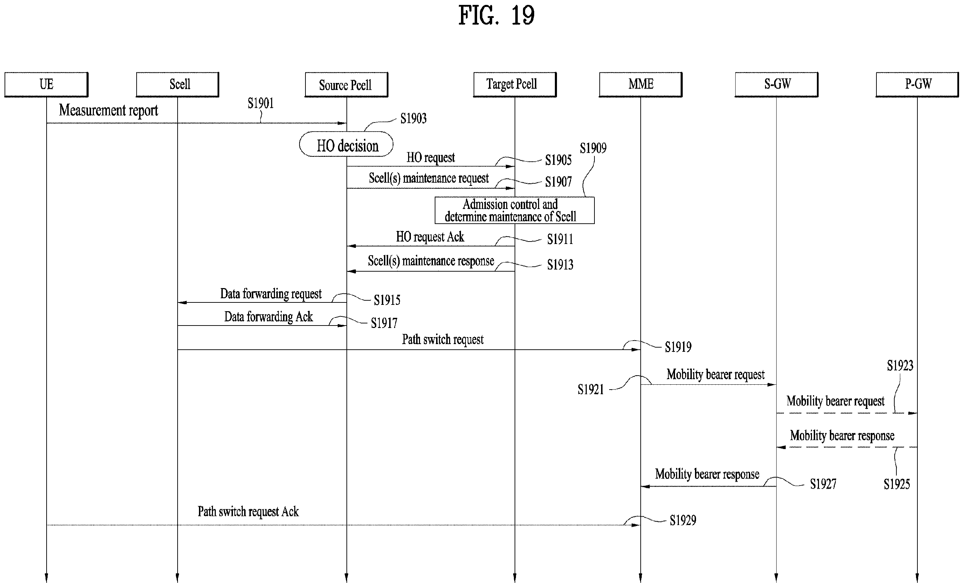

FIG. 19 illustrates a method for switching the path of data transmitted from a small cell gateway (S-GW) to a source Pcell to a specific Scell(s).

According to this method, if there is data pre-transmitted to the source Pcell, the UE receives the data from the source Pcell before the UE releases connection to the source Pcell, and changes the path of data transmitted from the S-GW to the source Pcell to a specific S cell(s), in contrast with a method of forwarding data stored to transmitted to the aforementioned source Pcell by establishing a bearer with specific Scell(s) which have been determined to be maintained and transmitting the data through the specific Scell(s).

Steps S1901 to S1913 of FIG. 19 are the same as steps of S1001 to S1013 of FIG. 10. Accordingly, for details of steps S1901 to S1913, refer to the description give above with reference to FIG. 10. Hereinafter, a description will be given of a method for switching aDL data forwarding path of data transmitted from the S-GW to the source Pcell for a dual connectivity mode UE to specific Scell(s).

When the procedures for specific Scell(s) maintenance between the source Pcell and target Pcell described in the previous embodiments are completed, the source Pcell may transmit a data forwarding request message to the specific Scell(s) (S1915).

The data forwarding request message may contain a message type field (an indicator indicating the data forwarding request message), a PCID or ECGI of the source Pcell, a PCID or ECGI of the specific Scell(s), context information on the UE (UE ID (e.g., C-RNTI or UE X2AP ID), a QCI of E-RAB, ARP, UE-AMBR, etc.) and the ID of a DRB established by the specific Scell(s) for DL packet transmission to the UE in the radio interval.

The specific Scell(s) receiving the data forwarding request message may establish a DRB with the UE using the DRB ID contained in the data forwarding request message.

The specific Scell(s) does not guarantee QoS for a UE, the specific Scell(s) may transmit a data forwarding failure message to the source Pcell in consideration of the QCI of the E-RAB for the UE and QoS such as ARP.

If the specific Scell(s) guarantees QoS for the UE and establishes a DRB, the specific Scell(s) may transmit a data forwarding Ack message to the source Pcell (S1917).

The source Pcell receiving the data forwarding Ack message may recognize that the Pcell needs to forward DL data to the specific Scell(s).

In addition, the specific Scell may transmit a path switching request message to the MME to switch the DL data forwarding path to the path of S1 bearer in order to transmit DL data to the UE during handover of the UE (S1919).

The path switching request message may contain information for changing the E-RAB on DL (e.g., S1 Scell TEID and E-RAB ID which the specific Scell(s) has allocated to generate DL S1 bearer from the S-GW), an ECGI (E-UTRAN Cell Global Identifier) of the Scell(s) and a TAI (Tracking Area Identity).

The subsequent procedure (steps S1921 to S1929) similar to the step of EPS bearer path switching request in the step of completing handover. Accordingly, the messages used in the EPS bearer path switching request step may be reused. The EPS bearer path switching procedure may be performed irrespective of the procedure of handover request from the source Pcell to the target Pcell. Alternatively, the EPS bearer path switching procedure may be performed after the handover preparation procedure is completed.

In the embodiments of the present invention, a method for specific Scell(s) to establish a bearer with the source Pcell to forward, to the source Pcell, DL data to be transmitted to the UE has been described. In this case, data of the source Pcell may be forwarded using the bearer previously established for the UE between the specific Scell(s) and the DRB or between the specific Scell(s) and the S-GW.

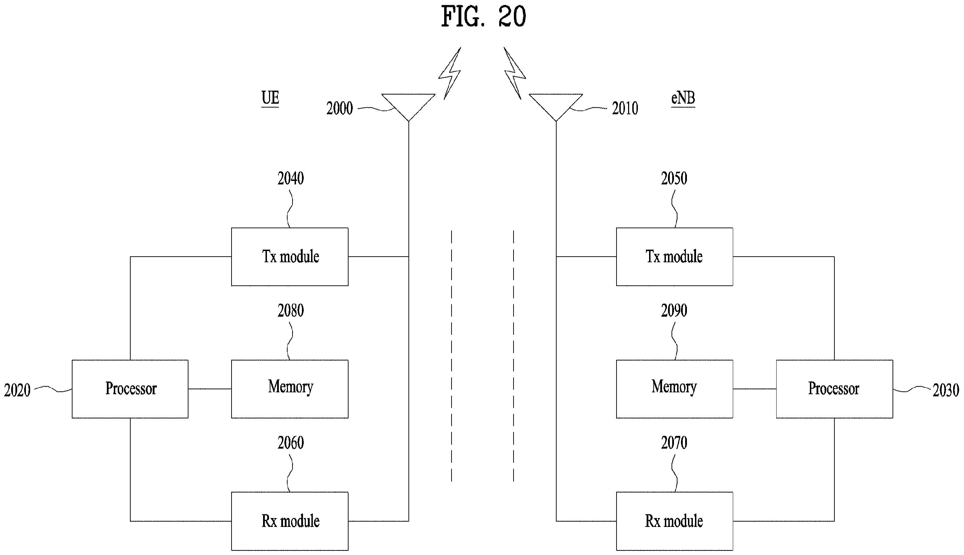

Apparatuses illustrated in FIG. 20 are means that can implement the methods described before with reference to FIGS. 1 to 19.

A UE may act as a transmitter on a UL and as a receiver on a DL. A BS may act as a receiver on a UL and as a transmitter on a DL. The term "cell" used in the embodiments of the present invention may refer to coverage of an eNB. Or the term "cell" may have the same meaning as the eNB.

That is, each of the UE and the BS may include a Transmitter (Tx) 2040 or 2050 and Receiver (Rx) 2060 or 2070, for controlling transmission and reception of information, data, and/or messages, and an antenna 2000 or 2010 for transmitting and receiving information, data, and/or messages.

Each of the UE and the BS may further include a processor 2020 or 2030 for implementing the afore-described embodiments of the present invention and a memory 2080 or 2090 for temporarily or permanently storing operations of the processor 2020 or 2030.

Embodiments of the present invention may be implemented using components and functions of the UE and the eNB.

The transmission (Tx) module and reception (Rx) module included in the UE and the eNB may perform functions such as packet modulation/demodulation, high-speed packet channel coding, Orthogonal Frequency Division Multiple Access (OFDMA) packet scheduling, Time Division Duplex (TDD) packet scheduling and/or channel multiplexing. The UE and the eNB of FIG. 20 may further include lower power RF (Radio Frequency)/IF (Intermediate Frequency) module. Herein, the Tx module and the Rx module may be referred to as a transmitter and a receiver. When they are used together, they may be referred to as a transceiver.

Meanwhile, the UE may be any of a Personal Digital Assistant (PDA), a cellular phone, a Personal Communication Service (PCS) phone, a Global System for Mobile (GSM) phone, a Wideband Code Division Multiple Access (WCDMA) phone, a Mobile Broadband System (MBS) phone, a hand-held PC, a laptop PC, a smart phone, a Multi Mode-Multi Band (MM-MB) terminal, etc.

The smart phone is a terminal taking the advantages of both a mobile phone and a PDA. It incorporates the functions of a PDA, that is, scheduling and data communications such as fax transmission and reception and Internet connection into a mobile phone. The MB-MM terminal refers to a terminal which has a multi-modem chip built therein and which can operate in any of a mobile Internet system and other mobile communication systems (e.g. CDMA 2000, WCDMA, etc.).

Embodiments of the present invention may be achieved by various means, for example, hardware, firmware, software, or a combination thereof.

In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the embodiments of the present invention may be implemented in the form of a module, a procedure, a function, etc. performing the above-described functions or operations. A software code may be stored in the memory 2080 or 2090 and executed by the processor 2040 or 2030. The memory is located at the interior or exterior of the processor and may transmit and receive data to and from the processor via various known means.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims not by the above description, and all changes coming within the meaning and range of the appended claims are intended to be embraced therein.

### [Industrial Applicability]

Embodiments of the present invention are applicable to various wireless access systems including a 3GPP system, a 3GPP2 system, and/or an IEEE 802.xx system. In addition to these wireless access systems, the embodiments of the present invention are applicable to all technical fields in which the wireless access systems find their applications.

## Claims

1. A method for supporting handover in a wireless access system supporting a dual connectivity mode, the method comprising:
receiving (S1 101), by a source primary cell, a measurement report message from a user equipment, UE, wherein the UE maintains connections to both the source primary cell and a small cell in the dual connectivity mode at the same time;
**characterized by**:
transmitting (S1105), by the source primary cell to a target primary cell, a handover request message including mobility information indicating a movement speed of the UE and small cell maintenance request information, wherein the small cell maintenance request information includes a small cell identifier of the small cell;
determining (S1107), by the target primary cell, whether or not to maintain the connection to the small cell based on the small cell maintenance request information when the movement speed of the UE is equal to or less than a threshold value;
receiving (S1109), by the source primary cell from the target primary cell, a handover request acknowledgement message including small cell maintenance response information including a small cell identifier determined by the target primary cell,
wherein the small cell maintenance request information is information for requesting maintenance of the dual connectivity mode for the small cell to support the handover,
wherein the small cell maintenance response information indicates whether the target primary cell is capable of maintaining the dual connectivity mode for the small cell.

2. The method according to claim 1, further comprising:
transmitting, by the source primary cell, downlink data through the small cell even if the UE performs the handover when the small cell maintenance response information indicates that the target primary cell continuously maintains the dual connectivity mode of the small cell.

3. The method according to claim 1, wherein the source primary cell determines whether or not to maintain the dual connectivity mode of the small cell based on the measurement report message.

4. The method according to claim 1, wherein an X2 interface or an S1 interface is used among the source primary cell, the target primary cell and the small cell as a backhaul link.

5. The method according to claim 1, wherein the source primary cell and the small cell are located at geographically spaced places.

## Patentansprüche

1. Verfahren zur Unterstützung der Übergabe in einem Drahtloszugangssystem mit Unterstützung von Doppelverbindungsmodus, wobei das Verfahren aufweist:
Empfangen (S1101) einer Messmeldungsnachricht von einem Benutzergerät UE durch eine primäre Quellzelle, wobei das UE in dem Dualverbindungsmodus gleichzeitig Verbindungen sowohl zu der primären Quellzelle als auch einer kleinen Zelle aufrechterhält;
**gekennzeichnet durch**:
Übertragen (S1105) einer Übergabeanforderungsnachricht, die Mobilitätsinformationen, welche eine Bewegungsgeschwindigkeit des UE angeben, und Aufrechterhaltungsanforderungsinformationen einer kleinen Zelle enthält, wobei die Aufrechterhaltungsanforderungsinformationen der kleinen Zelle eine Kleine-Zellen-Kennung der kleinen Zelle enthalten;
Bestimmen (S1107) durch die primäre Zielzelle, ob die Verbindung mit der kleinen Zelle aufrechterhalten werden soll oder nicht, basierend auf den Aufrechterhaltungsanforderungsinformationen der kleinen Zelle, wenn die Bewegungsgeschwindigkeit des UE kleiner oder gleich einem Schwellwert ist;
Empfangen (S1109) einer Übergabeanforderungs-Quittungsnachricht, die Aufrechterhaltungsantwortinformationen einer kleinen Zelle enthält, die eine durch die primäre Zielzelle bestimmte Kleine-Zelle-Kennung enthalten, von der primären Zielzelle durch die primäre Quellzelle,
wobei die Aufrechterhaltungsanforderungsinformationen der kleinen Zelle Informationen zum Anfordern der Aufrechterhaltung des Doppelverbindungsmodus für die kleine Zelle sind, um die Übergabe zu unterstützen,
wobei die Aufrechterhaltungsantwortinformationen der kleinen Zelle angeben, ob die primäre Zielzelle fähig ist, den Doppelverbindungsmodus für die kleine Zelle aufrechtzuerhalten.

2. Verfahren nach Anspruch 1, das ferner aufweist:
Übertragen von Abwärtsverbindungsdaten über die kleine Zelle durch die primäre Quellzelle, auch wenn das UE die Übergabe durchführt, wenn die Aufrechterhaltungsantwortinformationen der kleinen Zelle angeben, dass die primäre Zielzelle den Doppelverbindungsmodus der kleinen Zelle fortlaufend aufrechterhält.

3. Verfahren nach Anspruch 1, wobei die primäre Quellzelle basierend auf der Messmeldungsnachricht bestimmt, ob der Doppelverbindungsmodus der kleinen Zelle aufrechterhalten werden soll oder nicht.

4. Verfahren nach Anspruch 1, wobei eine X2-Schnittstelle oder eine S1-Schnittselle zwischen der primären Quellzelle, der primären Zielzelle und der kleinen Zelle als eine Backhaul-Verbindung verwendet wird.

5. Verfahren nach Anspruch 1, wobei die primäre Quellzelle und die kleine Zelle an geographisch beabstandeten Orten angeordnet sind.

## Revendications

1. Procédé de prise en charge d'un transfert intercellulaire dans un système d'accès sans fil prenant en charge un mode à double connectivité, le procédé comprenant :
la réception (S1101), par une cellule primaire source, d'un message de rapport de mesure en provenance d'un équipement d'utilisateur, UE, dans lequel l'UE maintient des connexions avec à la fois la cellule primaire source et une petite cellule dans le mode à double connectivité en même temps ;
**caractérisé par** :
la transmission (S1105), par la cellule primaire source à destination d'une cellule primaire cible, d'un message de demande de transfert intercellulaire incluant des informations de mobilité indiquant une vitesse de déplacement de l'UE et des informations de demande de maintien de petite cellule, dans lequel les informations de demande de maintien de petite cellule incluent un identifiant de petite cellule de la petite cellule ;
la détermination (S1107), par la cellule primaire cible, de s'il faut ou non maintenir la connexion à la petite cellule sur la base des informations de demande de maintien de petite cellule lorsque la vitesse de mouvement de l'UE est inférieure ou égale à une valeur seuil ;
la réception (S1109), par la cellule primaire source en provenance de la cellule primaire cible, d'un message d'accusé de réception de demande de transfert intercellulaire incluant des informations de réponse de maintien de petite cellule incluant un identifiant de petite cellule déterminé par la cellule primaire cible,
dans lequel les informations de demande de maintien de petite cellule sont des informations pour demander le maintien du mode à double connectivité pour que la petite cellule prenne en charge le transfert intercellulaire,
dans lequel les informations de réponse de maintien de petite cellule indiquent si la cellule primaire cible est capable ou non de maintenir le mode à double connectivité pour la petite cellule.

2. Procédé selon la revendication 1, comprenant en outre :
la transmission, par la cellule primaire source, de données de liaison descendante par l'intermédiaire de la petite cellule même si l'UE effectue le transfert intercellulaire lorsque les informations de réponse de maintien de petite cellule indiquent que la cellule primaire cible maintient continuellement le mode à double connectivité de la petite cellule.

3. Procédé selon la revendication 1, dans lequel la cellule primaire source détermine s'il faut ou non maintenir le mode à double connectivité de la petite cellule sur la base du message de rapport de mesure.

4. Procédé selon la revendication 1, dans lequel une interface X2 ou une interface S1 est utilisée parmi la cellule primaire source, la cellule primaire cible et la petite cellule en tant qu'une liaison terrestre.

5. Procédé selon la revendication 1, dans lequel la cellule primaire source et la petite cellule sont situées à des emplacements espacés géographiquement.
